# EUROPEAN PATENT APPLICATION

(11) **EP 1 659 483 A2**
(43) Date of publication of application: **24.05.2006**
(21) Application number: 05021732.2
(22) Date of filing: 05.10.2005
(51) Int. Cl.: G06F 3/12

(54) **Multilevel device capabilities hierarchy**

(30) Priority: 18.11.2004 US 992065
(71) Applicant: Microsoft Corporation, Redmond WA 98052 (US)
(72) Inventor: Kuhn, Benjamin J., Redmond, WA 98052 (US); Emerson, Daniel F., Redmond, WA 98052 (US); Yue, Feng, Redmond, WA 98052 (US)
(74) Representative: Goddar, Heinz J.

(57) **Abstract**

Methods and systems for describing device capabilities are described. An exemplary schema is presented and constitutes the communication language between applications and devices. The schema is built on a framework that uses schema keywords to express the full set of user configurable capabilities for a particular device. In the illustrated and described embodiments, the schema utilizes a hierarchical structure that allows different levels of granularity in expressing a device's capabilities.

## Description

### TECHNICAL FIELD

This invention pertains to methods and systems for discovering device capabilities.

### BACKGROUND

Discovering device capabilities, such as user configurable capabilities, can facilitate use of a device. For example, if an application is able to ascertain the capabilities of a particular hardware or firmware device, then the application and user should be able to make full use of the device's capabilities. For example, in the printing space, if an application is able to ascertain the capabilities of drivers and driver-related components such as the print processor, the application can make full use of an associated printer. Yet, there do not exist consistent, open and extensible ways of describing device capabilities. Rather, device capabilities tend to be described using flat, fixed lists. This manner of describing capabilities has limited utility and does not allow for scoping of the capabilities.

Accordingly, this invention arose out of concerns associated with providing improved methods and systems for describing device capabilities, such as a device's settings, and using the description of those capabilities to more effectively use the device.

### SUMMARY

Methods and systems for describing device capabilities are described. An exemplary schema is presented and constitutes the communication language between applications and devices. The schema is built on a framework that uses schema keywords to express the full set of user configurable capabilities for a particular device. In the illustrated and described embodiments, the schema utilizes a hierarchical structure that allows different levels of granularity in expressing a device's capabilities, such as a device's available settings. Having received an expression of a device's available settings, a client is now able to select and utilize a specific device configuration.

### BRIEF DESCRIPTION OF THE DRAWINGS

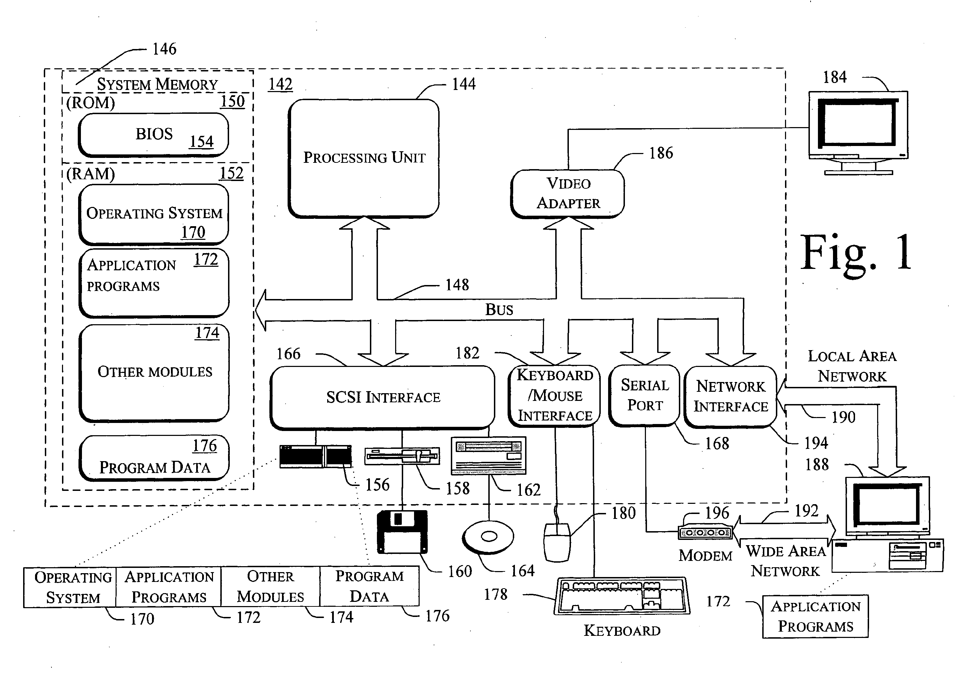

Fig. 1 is an exemplary computing device that can be used to implement the described embodiments.

### DETAILED DESCRIPTION

### Overview

In the discussion below, methods and systems for describing device capabilities are described. An exemplary schema is presented and constitutes the communication language between applications and devices. The schema is built on a framework that uses schema keywords to express the full set of user configurable capabilities for a particular device. In the illustrated and described embodiments, the schema utilizes a hierarchical structure that allows different levels of granularity in expressing a device's capabilities.

In the discussion that follows, the schema and its use is described in the context of a printing system that includes a printing device that utilizes a print schema to describe its capabilities to an application. In these embodiments, the schema constitutes the communication lauguage between applications, print subsystem components and devices. Print system components include, by way of example and not limitation, printer drivers, and future filter pipeline filters, and the like. It is to be appreciated and understood, however, that the schema and its use is not to be limited to only the printing environment. Accordingly, principles of the schema and its use can be applied in environments other than printing environments without departing from the spirit and scope of the claimed subject matter.

In the discussion that follows, device capabilities are published or described in a plain-text hierarchically-structured document referred to as the "PrintCapabilities" document. In one embodiment, the hierarchically structured document comprises an XML document. The PrintCapabilities document comprises terms defined in the print schema keywords and private extensions. Devices or device drivers generate a PrintCapabilities document of their current set of configurable options when queried by clients, which can be either applications or the printing subsystem. In the described embodiment, the PrintCapabilities document explicitly describes all attributes of the device and the allowable settings for each attribute. Through the use of the print schema framework, device attributes can be precisely described and efficiently compared. By using key words contained in the print schema keywords document and the structure defined in the print schema framework, devices can enable clients to more efficiently use device capabilities.

In the illustrated and described embodiment, the PrintCapabilities documents represent a hierarchy of multiple levels of capabilities. In the specific examples described below, three levels of capabilities are described―job, document, and page―and are represented by an XML document. Each level represents a certain print job component and specifies how settings should be defined in a PrintTicket and applied in PrintTicket processing, which is described in more detail below.

Preliminarily, before describing the PrintCapabilities document and its use, and in an effort to provide some context for that discussion, an exemplary print schema on which the PrintCapabilities document builds is described under the main heading "Print Schema" below. Following that discussion and appearing under the main heading "PrintCapabilities Schema and Document Construction" is a discussion of the PrintCapabilities Schema and document. Finally, to provide an example of how the PrintCapabilities document can be used, a discussion of a PrintTicket that utilizes information contained in the PrintCapabilities document is provided under the main heading "PrintTicket Schema and Document Construction".

### Print Schema

The Print Schema provides an Extensible Markup Language (XML)-based format for expressing and organizing a large set of properties that describe either a job format or PrintCapabilities in a hierarchically structured manner. In the illustrated and described embodiment, the Print Schema is an umbrella term that includes two components, the Print Schema Keywords and the Print Schema Framework. The Print Schema Keywords document is a public schema that defines a set of element instances that can be used to describe device attributes and print job formatting. The Print Schema Framework is a public schema that defines a hierarchically structured collection of XML element types, and specifies how the element types can be used together.

The Print Schema Keywords and the Print Schema Framework form the foundation for two Print Schema-related technologies, the PrintCapabilities Schema, and the PrintTicket Schema.

One of the goals of the Print Schema is to support schema extensions by providers. That is, providers are not restricted to using only those Property, Feature, Option, or ParameterInit instances defined in the Print Schema Keywords in the technologies built on the Print Schema Framework. Rather, provider-specific element instances may be freely interspersed within element instances defined in the Print Schema Keywords. The only requirement is that provider-specific (that is, private) Property instances must belong to a namespace that is clearly associated with the provider.

### Print Schema Background

The Print Schema is intended to address the problems of opaqueness and ambiguity associated with internal communication between the components of the print subsystem, and external communication between the print subsystem and applications. The Print Schema and its related technologies provide a consistent, unambiguous and extensible method of communication of settings and capabilities in a consolidated and logical manner.

The conceptual foundations of the Print Schema Keywords and the Print Schema Framework are consistency, lack of ambiguity and extensibility. Consistency is achieved through the use of the Print Schema Keywords and Print Schema Framework as the building blocks for the communication between printing components. Applications, the Microsoft® Windows® printing subsystem, and IHV plug-ins and drivers interact using this common mechanism. These keywords, their structure and their meaning will be well-defined by the public schema. This prevents ambiguity in the meaning of a particular keyword, and prevents redundant or duplicate keywords. All components can rely on using a particular keyword to convey a certain intent and have that intent be well-understood by the recipient. Extensibility facilitates the longevity of the Print Schema Keywords, ensuring that the public schema is a dynamic entity. The structure also allows private extensions, which grants independent hardware vendors (IHVs) the flexibility to innovate as desired, keeping in mind future inclusion of a private keyword into the public schema is desirable for preserving consistency and preventing ambiguity.

### Print Schema-Related Technologies

As noted above, two related technologies that build upon the Print Schema are the PrintCapabilities and PrintTicket technologies.

The PrintCapabilities technology is a method of publishing configurable PrintCapabilities. PrintCapabilities are published in a plain-text Extensible Markup Language (XML) document called the PrintCapabilities document, that consists of terms defined in the Print Schema Keywords and private extensions. This document describes all of the configurable PrintCapabilities currently available on the device, such as finishing options and page layout options. The PrintCapabilities document explicitly describes all attributes of the device and the allowable settings for each attribute. Through the use of the Print Schema Framework, device attributes can be precisely described and efficiently compared. By using the keywords contained in the Print Schema Keywords document, and the structure defined in the Print Schema Framework, devices can enable clients to more effectively use PrintCapabilities.

Relative to the print subsystem in Microsoft® Windows® Server 2003 and earlier, the PrintCapabilities technology allows client and print subsystem components to transparently view the information contained in the current Microsoft Win32® system binary PrintCapabilities. This enables the client to query PrintCapabilities, receive a consistent and well-understood XML snapshot, and use it to construct a PrintTicket for a device without invoking the driver user interface (UI).

The PrintTicket technology, which is intended to replace the use of the current DEVMODE structure, is an XML method of specifying and persisting job formatting and device configuration information. A PrintTicket instance is a plain-text XML document that assigns particular settings for device attributes, and conveys user intent. There are two types of PrintTickets: generic PrintTickets, which are not generated for a particular device; and device-specific PrintTickets, which are constructed for a particular device. Generic PrintTickets, which are intended to be portable across devices, derive their contents by selecting settings for each of the device attributes described exclusively in the Print Schema Keywords. Device-specific PrintTickets derive their contents from a PrintCapabilities document, selecting settings for each device attribute advertised by this document. These PrintTickets may also include private extensions, specific to one device model or device model family.

Relative to the current print subsystem, the PrintTicket technology enables all components and clients of the print subsystem to have transparent access to the information currently stored in the public and private portions of the DEVMODE structure, using a well-defined XML format. This design resolves current problems encountered in driver upgrade or downgrade and driver mismatch scenarios in drivers designed for the PrintTicket technology. These scenarios can currently result in a loss of settings and hence a negative customer experience. The PrintTicket also enables new scenarios, such as enabling a printer driver to expose its private DEVMODE settings to applications and custom plug-ins in a consistent and unambiguous manner. This enables printing components to be more transparent and handle settings migrations more cleanly. The PrintTicket interfaces will be exposed to applications through methods on managed code objects that will also be available to scripts. In the new application framework built on managed code objects in Microsoft's "Longhorn", the PrintTicket is the standard way of describing document settings.

### Terms Used in the Print Schema

The following section contains terms, in accordance with one embodiment, that are specific to the Print Schema and related technologies.

An *attribute name* is the token on the left side of the equals sign in a standard Extensible Markup Language (XML) attribute. The standard representation of an XML attribute is <attribute name>="<attribute value>". Although similar, the term "attribute name" must not be confused with the name attribute defined in the Print Schema Framework. The name attribute defined in the Print Schema Framework is a specific instance of an attribute name.

*A candidate Option* is any Option that belongs to the list being evaluated during the scoring process. See the terms, *scoring or mapping Option,* and *reference Option* below.

The term *configuration* describes one of the states a device can assume or be placed in. The device performs its task differently in each state. There is a distinct and identifiable difference between the behavior of the device in each of these states. For example, in one state, the media is pulled out of one tray and ends up in another tray. A change in either or both of these trays determines a different state.

A *constraint* refers to information needed to determine the validity of a configuration. A constraint is often of the form: FeatureA set to Optionl is not compatible with FeatureB set to Option2.

*Corresponding elements* refers to two elements that have the same location relative to a specified pair of origin elements. The origin elements are frequently two Option elements that are being compared.

A *default Option* is the Option that is designated by either the Print Schema or the PriritCapabilities provider as the Option that is assigned to a Feature when the PrintTicket does not contain an explicit setting for that Feature. Each Feature has a designated default Option.

A *device configuration attribute* refers to a device attribute that contributes to the definition of the device configuration. A device configuration attribute is represented in the Print Schema Framework by either Feature/Option or parameter constructs. Note that attribute used in this context has no relation to either XML attributes or to Print Schema Framework-defined Attribute elements.

An *element type* refers to the type of each XML element defined in the Print Schema Framework and is identified by its XML element tag.

*Elements in common* has the same meaning as *corresponding elements* above.

A *Feature* refers to a Print Schema Framework-defined construct that represents a specific device configuration attribute. Each Feature instance represents one device attribute. A Feature instance is defined by explicitly defining each of its states.

An *identity Option* refers to the Option that has no observable effect when selected; in effect, a "no-op". The result is always the same regardless of the number of times this Option is selected.

An *instance name* refers to an XML attribute that identifies the specific instance of an element type. See *name attribute* below.

An *interface client* refers to the entity that consumes PrintCapabilities documents, and that constructs and consumes PrintTickets. Common examples of interface clients include user interface (UI) modules and rendering modules.

An *interface provider* refers to the entity that implements and exposes functionality by means of an interface. In the Print Schema, this amounts to creating PrintCapabilities documents and validating PrintTickets.

The *location of an element* refers to the position of a particular instance of an element within the element hierarchy. The location is defined by both the particular element and all ancestors of that element. In other words, location is the equivalent of a fully qualified path in a file system.

A *name attribute* refers to the designation given to the XML attribute with an attribute name of "name". This attribute appears in most of the element types defined in the Print Schema Framework. It identifies and defines instances of each element type. The following two terms refer to name attributes: the Sibling Uniqueness Rule, and the Namespace Convention.

A *Namespace Convention* states that Schema-defined name attributes, as well as any schema-defined object, exist in a dedicated namespace, the public namespace, and that privately-defined name attributes must exist in a different namespace, one that can be identified as belonging to the defining party.

An *Option* is a Print Schema Framework construct used to represent states that each Feature can assume or be placed in. For example, if the Feature represents media size, typical Option values might be Letter, Legal, A4, among others.

A *parameter* is supported by the Print Schema and describes parameterized data for the purpose of user input. There are three Print Schema Framework element types that play roles in parametric input: *ParameterDef, ParameterInit,* and *ParameterRef* A ParameterDef element characterizes a parameter (its range of values, the type of its data, and other characteristics). A ParameterInit element is used to initialize a parameter. A ParameterRef element is used to reference a particular instance of a ParameterInit element.

A *parameterized Option* is an Option instance that contains at least one ScoredProperty element that in turn contains a ParameterRef element rather than a Value element.

*Perfectly-matching Options* refers to two Option instances that are considered to match perfectly if for every ScoredProperty element in one Option instance, there is a corresponding ScoredProperty instance in the other Option instance, and both Value elements of the corresponding ScoredProperty instances are identical.

The *PrintCapabilities Schema* refers to the schema that defines the syntax and semantics used by a PrintCapabilities document. The PrintCapabilities Schema and the PrintTicket Schema are subsets of the Print Schema. See also *Print Schema Framework* below.

The *PrintTicket Schema* refers to the schema that defines the syntax and semantics used by the PrintTicket. The PrintTicket Schema and the PrintCapabilities Schema are subsets of the Print Schema. See also *Print Schema Framework* below.

The *Print Schema Framework* refers to the schema that defines the syntax and semantics used by Print Schema technologies. For example, the Print Schema Framework defines a collection of element types and their uses, but does not enumerate all the element instances.

The *Print Schema Keywords* refers to the schema that defines individual instances of Property, Feature, and Option elements that are commonly used to describe devices and job formatting. This schema defines a common language that makes PrintCapabilities documents and PrintTickets portable. Also known as the public schema.

*Privately-defined* refers to any instances of elements that appear in a PrintCapabilities document or PrintTicket that are not explicitly defined in the Print Schema Keywords. These element instances must be explicitly qualified with a per-vendor private namespace.

A *reference Option* refers to the Option that each candidate Option is compared to. A reference Option typically originates from the PrintTicket. See the terms, *scoring or mapping Option,* and *candidate Option.*

The *root level* is the base of the hierarchical structure of the Print Schema Framework. A root level element is defined as a child of a PrintCapabilities element or a PrintTicket element.

A *Scored Property* is a Print Schema Framework construct used to represent the qualities that distinguish or differentiate one Option instance from another. An example is the difference between Letter and Legal sized paper.

A *scoring or mapping Option* refers to the process of selecting from a list the (candidate) Option instance that best matches a given (reference) Option instance. Closely related terms are candidate Option and reference Option.

The *Sibling Uniqueness Rule* states that all siblings of the same element type must have unique name attributes. Some element types are exempt from this rule. These exceptions are defined in the Print Schema Framework.

*Single-valued versus multivalued Property* is a Property whose Value is invariant (does not depend on the configuration) is considered to be single-valued. Such a Property has only a single Value under any possible configuration. A Property that depends on the configuration is considered to be multivalued.

*Validation* refers to the process of verifying that a PrintTicket conforms to the schema and represents a configuration that can be executed by a specific device.

### Syntax of the Print Schema

The Print Schema is expressed in Extensible Markup Language (XML) syntax. Readers are therefore expected to be familiar with XML syntax and terms such as element, element tag, element content, attribute, and namespace. The Print Schema Framework is composed of a small number of element types; each element type serves a specific purpose in the technologies built on the Print Schema.

Element types are distinguished by their XML element tag. The Print Schema Framework defines the overall structure and organization of the dependent technologies, by denoting for each element type which element types are allowed as child elements.

Many element types are differentiated from others of the same type by the name attribute, which plays a significant role in the schema. The name attribute serves to identify instances of each element type. The Print Schema Keywords defines a set of values for the name attribute for many of the element types. In most cases, providers can assign their own values to the name attribute. They need only ensure the values are XML QNames qualified with a namespace that is unique to the provider.

### Summary of Element Types

This section lists the element types that are defined in the Print Schema Framework, and that are used to express the Print Schema-related technologies. Each element type is described in detail in the subsequent sections. The descriptions also specify the context in which the element type may appear (the elements that can be parents of the given element) and the allowed content of the element.

### Attribute

An Attribute element is used to specify the meaning of a Print Schema Framework element in a well-defined manner. The system uses Attribute elements to customize its processing of Property and ScoredProperty elements. Attribute elements should appear only where indicated by the Print Schema, to perform the purposes specified by the Print Schema.

The element tag is "<Attribute>" and its XML attributes are as follows:
*name* holds the name of the Attribute. The Print Schema Keywords document defines the purpose of each standard Attribute and the specific contexts in which it may appear. Only attribute names defined in the Print Schema Keywords are allowed. Note that the current version of the Print Schema Keywords document does not define any attribute names; *propagate* determines the derived documents in which the Attribute element can appear. No values for this Extensible Markup Language (XML) attribute are currently defined.

The following table lists the elements that may be parents of this element, the elements that may be children of this element, and any restrictions on the element itself.

| **Category** | **Details** |
|---|---|
| Parent elements | Attribute |
| | AttributeSet |
| | Property |
| | ScoredProperty |
| Child elements | Attribute (zero or more) |
| | Value (zero or more) |
| This element | No character data is permitted. |
| | Duplicate child siblings are not permitted |

Attribute elements may not have any configuration dependencies. The following example illustrates an Attribute element.

### AttributeSet

An AttributeSet element allows one or more Property elements to reference the same collection of Attribute elements, thereby avoiding unnecessary duplication of Attribute elements. A single Property element can reference multiple AttributeSet elements, along with individual Attribute elements. If the definition of an Attribute allows it to be overwritten, and an Attribute has been multiply defined, the precedence is that individual Attribute elements override AttributeSet elements, and within each type (type: individual attributes or AttributeSet elements), the Attribute elements appearing first have higher precedence.

The element tag is "<AttributeSet>" and its XML attributes are as follows: *name* defines a unique name in the context of the current document. An AttributeSetRef element is used to reference a particular AttributeSet element. Duplicate AttributeSet name attributes render the PrintCapabilities document or PrintTicket invalid.

The following table lists the elements that may be parents of this element, the elements that may be children of this element, and any restrictions on the element itself.

| **Category** | **Details** |
|---|---|
| Parent elements | PrintCapabilities |
| | PrintTicket |
| Child elements | Attribute (one or more) |
| This element | No character data is permitted. |
| | Duplicate child siblings are not permitted. |

An AttributeSet element may not have any configuration dependencies. The following example illustrates an AttributeSet element that contains two Attribute elements, myAttr1 and myAttr2.

### AttributeSetRef

An AttributeSetRef element allows a Property element to reference a group of Attribute elements contained in an AttributeSet, eliminating the need for Attribute elements to reside directly in the Property as child elements. This allows a group of Attribute elements to be shared by multiple Property elements.

The element tag is "<AttributeSetRef>" and its XML attributes are as follows: *name* specifies the name attribute of the AttributeSet element to be referenced within the context of the current document.

The following table lists the elements that may be parents of this element, the elements that may be children of this element, and any restrictions on the element itself.

| **Category** | **Details** |
|---|---|
| Parent elements | Property |
| | ScoredProperty |
| Child elements | None permitted. |
| This element | No character data is permitted. |
| | Duplicate child siblings are not permitted. |

An AttributeSet element may not have any configuration dependencies. The following example illustrates a Property element that contains an AttributeSetRef element.

### Feature

A Feature element contains a complete list of the Option and Property elements that fully describe a device attribute, job formatting setting, or other relevant characteristic. Its element tag is "<Feature>" and its XML attributes are as follows: *name* holds the name of the Feature, either a standard Feature or a privately-defined Feature.

The following table lists the elements that may be parents of this element, the elements that may be children of this element, and any restrictions on the element itself.

| **Category** | **Details** |
|---|---|
| Parent elements | PrintCapabilities |
| | Feature |
| Child elements | One of the following groups: |
| | Feature (zero or more) |
| | Option (one or more) |
| | Property (zero or more) |
| | or |
| | Feature (one or more) |
| | Option (zero or more) |
| | Property (zero or more) |
| This element | No character data is permitted. |
| | Duplicate child Option elements that are siblings are permitted. Duplicate name attribute shortcuts permitted. |

Feature elements may not have any configuration dependencies. An example of its use is as follows:

### Option

An Option element contains all of the Property and ScoredProperty elements associated with this option. Its element tag is "<Option>" and its XML attributes are as follows: *constrained* indicates whether the Option is available for selection or use. This Extensible Markup Language (XML) attribute can be set to one of the following values: *none* indicates the Option is not constrained; *PrintTicketSettings* indicates the Option is constrained by the PrintTicket settings; *AdminSettings* indicates the Option is constrained by the administrator's settingsit cannot be enabled by the user; *DeviceSettings* indicates the Option is constrained by the device settings or device options that are physically installed. This attribute is optional for a PrintCapabilities document. The *name* attribute contains the name of the Option. Note that this is a shortcut for the ScoredProperty named OptionName.

The following table lists the elements that may be parents of this element, the elements that may be children of this element, and any restrictions on the element itself.

| **Category** | **Details** |
|---|---|
| Parent elements | Feature |
| Child elements | Property (zero or more) |
| | ScoredProperty (one or more) |
| This element | No character data is permitted. |
| | Duplicate child siblings are not permitted. |

An Option definition element may not have any configuration dependencies. The following example defines an Option element containing a ScoredProperty element named OptionName. The Value of the ScoredProperty element is "Letter".

The following definition uses the shortcut method of defining a name for the Option, but is functionally identical to the previous example.

### <Option name= "Letter"/>

### ParameterDef

A ParameterDef element defines the valid characteristics of parameteric input. The value is entered by means of a ParameterInit element. The element tag is "<ParameterDef>" and its XML attributes are as follows: *name* defines a unique name for the parameter in the context of the current document. Duplicate ParameterDef name attributes render the PrintCapabilities invalid.

The following table lists the elements that may be parents of this element, the elements that may be children of this element, and any restrictions on the element itself.

| **Category** | **Details** |
|---|---|
| Parent elements | PrintCapabilities |
| Child elements | Property (zero or more) |
| | The following standard Property elements must appear as the content of a ParameterDef element. |
| | DataType |
| | DefaultValue |
| | InitializerSrc * |
| | Mandatory |
| | MaxLength or Max Value |
| | MinLength or Min Value. |
| | Multiple |
| | UnitType |
| This element | No character data is permitted. |
| | Duplicate child siblings are not permitted |
| * Not supported in "Longhorn". In operating system versions subsequent to "Longhorn", PrintCapabilities and PrintTicket providers must be able to handle this Property. | |

A ParameterDef and its content to any nesting level may not have any configuration dependencies.

The following example sets all of the required Property elements for this parameter. The example in ParameterInit demonstrates how to initialize this parameter.

### Parameterlnit

Defines a value for an instance of a ParameterDef element. A ParameterInit element is the target of the reference made by a ParameterRef element. Its element tag is "<ParameterInit>" and its XML attributes are as follows: *name* holds the name attribute of the ParameterDef element that is to be initialized within the context of the current document.

The following table lists the elements that may be parents of this element, the elements that may be children of this element, and any restrictions on the element itself.

| **Category** | **Details** |
|---|---|
| Parent elements | PrintTicket (PrintTicket root) |
| Child elements | Value (zero or more) |
| This element | No character data is permitted. |
| | Duplicate child siblings are not permitted. |

There are no configuration dependencies. The following example initializes a parameter to 3. The example in ParameterDef demonstrates how to set all of the required Property elements for this parameter.
<ParameterInit name="CopyCount">3</ParameterInit>

### ParameterRef

A ParameterRef element defines a reference to a ParameterInit element. A ScoredProperty element that contains a ParameterRef element does not have an explicitly-set Value element. Instead, the ScoredProperty element receives its value from the ParameterInit element referenced by a ParameterRef element. It element tag is "<ParameterRef>" and its XML attributes are as follows: *name* holds the name attribute of the ParameterDef element that is referenced within the context of the current document.

The following table lists the elements that may be parents of this element, the elements that may be children of this element, and any restrictions on the element itself.

| **Category** | **Details** |
|---|---|
| Parent elements | ScoredProperty |
| Child elements | None permitted. |
| This element | No character data is permitted. |
| | Duplicate child siblings are not permitted. |

ParameterRef elements may not have any configuration dependencies. The following example illustrates how to use ParameterRef elements to enable users to enter custom media size parameters.

### PrintCapabilities

A PrintCapabilities element represents the root of the PrintCapabilities document. The PrintCapabilities document contains all of the information needed to describe the supported device attributes, given a particular device configuration. Its element tag is "<PrintCapabilities>" and its XML attributes are as follows: *version* specifies the version of the schema that defines element types and their structure. The version attribute is of type integer. The current schema version is designated "1". This attribute is required.

The following table lists the elements that may be parents of this element, the elements that may be children of this element, and any restrictions on the element itself.

| **Category** | **Details** |
|---|---|
| Parent elements | Document root only. |
| Child elements | AttributeSet (zero or more) |
| | Feature (zero or more) |
| | ParameterDef (zero or more) |
| | Property (zero or more) |
| This element | No character data is permitted. |
| | Duplicate child siblings are not permitted. |

The root element may not have any configuration dependencies. For an example of is use, see the PrintCapabilities Document Example below.

### PrintTicket

A PrintTicket element is the root element of the PrintTicket document. A PrintTicket element contains all job formatting information required to output a job. Its element tag is "<PrintTicket>" and its XML attributes are as follows: *version* specifies the version of the schema that defmes element types and their structure, a literal of type integer. The current schema version is "1". This attribute is required.

The following table lists the elements that may be parents of this element, the elements that may be children of this element, and any restrictions on the element itself.

| **Category** | **Details** |
|---|---|
| Parent elements | Document root only. |
| Child elements | AttributeSet (zero or more) |
| | Feature (zero or more) |
| | ParameterInit (zero or more) |
| | Property (zero or more) |
| This element | No character data is permitted. |
| | Duplicate child siblings are not permitted. |

Configuration dependencies are applicable only to elements in a PrintCapabilities document. For an example, see the PrintTicket example below.

### Property

A Property element declares a device, job formatting, or other relevant property whose name is given by its name attribute. A Value element is used to assign a value to the Property.

A Property can be complex, possibly containing multiple subproperties. Subproperties are also represented by Property elements. It element tag is "<Property>" and its XML attributes are as follows: *name* holds the name attribute of the Property, which is either a standard Property or a privately-defined Property.

The following table lists the elements that may be parents of this element, the elements that may be children of this element, and any restrictions on the element itself.

| **Category** | **Details** |
|---|---|
| Parent elements | PrintCapabilities |
| | Feature |
| | PrintTicket |
| | Option |
| | ParameterDef |
| | Property |
| | ScoredProperty |
| Child elements | The system assigns no significance to the ordering of the elements. If clients choose to ascribe some significance in the ordering of the elements, they are free to do so. |
| | Attribute (zero or more private attributes, zero standard attributes) |
| | AttributeSetRef (zero or more) |
| | Property (zero or more) |
| | Value (zero or more) |
| This element | No character data is permitted. |
| | Duplicate child Value elements that are siblings are permitted. |

A Property may have configuration dependencies, except when it appears within a ParameterDef element. An example of its use is as follows:
Declare a Property named ModelName with a Value of "HP 1200C".

### ScoredProperty

A ScoredProperty element declares a property that is intrinsic to an Option definition. Such properties should be compared when evaluating how closely a requested Option matches a device-supported Option. Its element tag is "<ScoredProperty>" and its XML attributes are as follows: *name* holds the name attribute of the ScoredProperty, either a standard property or a privately-defined property.

The following table lists the elements that may be parents of this element, the elements that may be children of this element, and any restrictions on the element itself.

| **Category** | **Details** |
|---|---|
| Parent elements | Option |
| | ScoredProperty |
| Child elements | Attribute (zero or more, zero standard attributes) AttributeSetRef (zero or more) Either a ParameterRef or a Value Property (zero or more) ScoredProperty (zero or more |
| This element | No character data is permitted. |
| | Duplicate child siblings are not permitted. |

A ScoredProperty element may not have any configuration dependencies. An example of its use is as follows:

### Value

A Value element associates a literal with a type. Its element tag is "<Value>" and its XML attributes are as follows: *xsi:type* specifies the data type of Value, which must be one of the following XSD-defined types: string, integer, decimal, QName. If missing, the default data type is string.

The following table lists the elements that may be parents of this element, the elements that may be children of this element, and any restrictions on the element itself.

| **Category** | **Details** |
|---|---|
| Parent elements | AttributePropertyScoredProperty |
| Child elements | Only character content is permitted. |
| This element | Null content is allowed. Character content must conform to syntax defined by data type. |
| | Duplicate child siblings are not permitted. |

Value elements that appear within ScoredProperty and Attribute elements may not have any configuration dependencies. Value elements that appear within Property elements may have arbitrary dependencies on the configuration. An example of its use is as follows:
Define a Value of type decimal and initialize it to "128.5".

### Print Schema Framework

This section provides more detailed information on the meaning and usage of the Print Schema element types. The main focus of the initial version of the Print Schema Framework is to represent configurations and capabilities of device attributes. At a high level, this framework offers two different styles of describing a device attribute: as a Feature/Option construct, or as a parameter construct. If a device attribute has a small number of available values or states, then the attribute should be characterized as a Feature with the allowed values or states referred to as Option elements. Conversely, if a device attribute has a large number of available values or states and the set of all possible values is easily defined without resorting to explicit enumeration, the device attribute should be characterized as a parameter. (A parameter is defined by means of a ParameterDef element, and a parameter instance is initialized by means of a ParameterInit element.) Property and Attribute elements are used within Feature/Option and parameter constructs to provide a finer level of differentiation.

### Feature/Option Constructs

In Feature/Option representation, a device attribute is represented by a Feature element. The device attribute is uniquely identified by the name attribute in the device attribute's Feature element, as in the following example. In this example, the device attribute is Resolution.

The Print Schema defines a set of name attributes for certain Feature instances. These name attributes serve to identify a set of predefined Feature instances associated with specific configurable device attributes. These Feature instance names should be used whenever applicable, because they increase the portability of a PrintCapabilities document and the PrintTickets that are derived from them. Privately-defined Feature instances may be introduced if certain device attributes do not correspond to any of the schema-defined Feature instances. For information about the syntax for name attributes and the conventions that apply to schema-defined and privately-defined names, see XML Attributes below.

Each of the possible states is represented by an Option element. Each Option definition contains one or more ScoredProperty elements, which taken together uniquely describe or characterize the state that is being represented. The technique used to create Option definitions is described in Option Elements. All of the Option elements associated with a particular Feature element reside as child elements of the Feature element.

With respect to subfeatures, consider the following. The Print Schema Framework also allows Feature elements to be grouped together in a hierarchical manner. That is, a Feature element can itself contain one or more child Feature elements (subfeatures). This can be useful for organizing related Feature elements, or for Feature elements that control aspects of a device feature. One example is a device that supports stapling. Such a device might offer the user a choice of where to locate the staple, such as at the upper left corner, or the upper right corner, or along the top edge, or along the left edge. The user interface (UI) for this device should be able to present the user with the highest level choices first, which in this case is whether to use stapling. Only after the user has decided to use stapling should he or she be presented with a second tier of choices, staple location. A feature hierarchy adds the additional structure that makes such a user interface possible. The Print Schema Framework allows subfeatures to have their own child subfeatures, thereby permitting an unlimited level of nesting.

The Print Schema Framework also allows Option elements to appear at the same level as subfeatures; that is, as siblings within the same parent Feature element. This allows the user to make the high level decision (whether to use stapling) before making the subfeature selections. For this example the root Feature element, "Staple", might contain two Option elements, "On" and "Off", as well as a subfeature named "StapleLocation".

### Option Elements

The purpose of the Option element is to characterize one of the states that a device configuration attribute, represented by a Feature element, can assume. Each Option element definition contains one or more ScoredProperty elements that describe an intrinsic or essential characteristic of that Option. To facilitate portability and preservation of intent, the Print Schema defines many common Feature elements and a variety of Option elements for each Feature. It is therefore important to use Print Schema-defined Option elements, if at all possible, before you create your own Option definitions. Understanding the process of defining Option elements provides useful insights into the way the PrintCapabilities document and PrintTickets are used in the "Longhorn" printing architecture.

The Print Schema defines a special ScoredProperty element that is widely used in the Option definition of many Feature elements. The name attribute of this ScoredProperty element is OptionName. In its simplest form this ScoredProperty holds only a single Value element, whose xsi:type attribute is schema-defined to be QName. No other child elements are present. Because this simple form of the option name property is so widely used, the Print Schema Framework provides a special shortcut notation. The Option name can be specified as a name attribute in the Option element. If the Option definition contains only a single ScoredProperty, this shortcut considerably reduces the verbosity of the Option definition. For example, an Option definition can be expressed in conventional syntax as follows:

The previous Option definition can also be represented in the following shorthand notation.
<Option name="LetterExtra"/>

This shorthand notation has the following restrictions:
- The shorthand notation can be used only for the ScoredProperty element whose name attribute is "OptionName".
- The ScoredProperty element must exist as a child (not other descendant) of the Option element.
- The ScoredProperty element cannot contain any child elements other than a single Value element.
- The xsi:type specified in the Value element must be QName.

The shorthand notation can be used for the OptionName property even if the Option definition contains additional ScoredProperty elements.

### Parameter Constructs

Parameters complement the Feature/Option construct by concisely describing an acceptable range of values, rather than a discrete enumeration of values. The Print Schema Framework defines three elements specific to parameters: ParameterDef elements describe the parameter and its characteristics, ParameterInit elements define a particular instance or value for a parameter, and ParameterRef elements refer to a specific ParameteiInit element that is defined elsewhere.

A ParameterDef element differs from a ParameterInit element in that it describes the value that a ParameterInit element can contain, while a ParameterInit element assigns a value to the parameter. A ParameterDef element consists of a specific set of Property elements, which are children of the ParameterDef element, that specify the type of data, maximum, minimum, and default values for the data, and other information. These Property elements are discussed later in this topic.

ParameterDef elements can appear only in their allowed context. For the initial version of the Print Schema they may be located at the root level of the PrintCapabilities document. The name attribute of the ParameterDef element defines the parameter name. Each ParameterDef element in the PrintCapabilities document must be assigned a unique name attribute.

The meaning of a parameter name is universal; that is, if a ParameterDef element in one PrintCapabilities document has the same name attribute (the string formed from the namespace and the descriptive name of the ParameterDef element) as a ParameterDef element in another PrintCapabilities document, it is assumed that both of these elements represent the same concept and should be interpreted in the same manner. Thus a ParameterDef element defined in a PrintTicket for one PrintCapabilities document can be used to initialize the ParameterInit element of the same name defined in a different PrintCapabilities document.

As is true of all name attributes, the parameter name is in the form of an Extensible Markup Language (XML) QName. A Schema-defined parameter construct has a name that is qualified by the public namespace, forming the name attribute, while the name attribute of a privately-defined parameter construct is qualified by a private namespace that is unique to the creator.

ParameterDef elements that are defined in the Print Schema Keywords must be fully defined in a PrintCapabilities document. The Print Schema Keywords document provides nominal values for some Property elements of a ParameterDef element (such as DefaultValue and others), but the author of a PrintCapabilities document is responsible for defining the remaining Property elements. In any case, all Property elements must be explicitly defined in a ParameterDef element, including those that are defined in the Print Schema Keywords.

Certain Property elements of each ParameterDef element appearing in the Print Schema Keywords are designated as immutable. This means that all PrintCapabilities document defmitions of Print Schema Keywords-defined ParameterDef elements must preserve these Property elements without modification. These immutable Property elements allow the parameter constructs to be portable and unambiguous across all PrintCapabilities documents. A prime example is the units used in a ParameterDef element. These units should be immutable, to promote a consistent understanding of their meaning. Property elements of a ParameterDef that are designated as not immutable may be redefined within a PrintCapabilities document.

A ParameterDef element is composed of the following Property elements. All must be present unless otherwise noted.

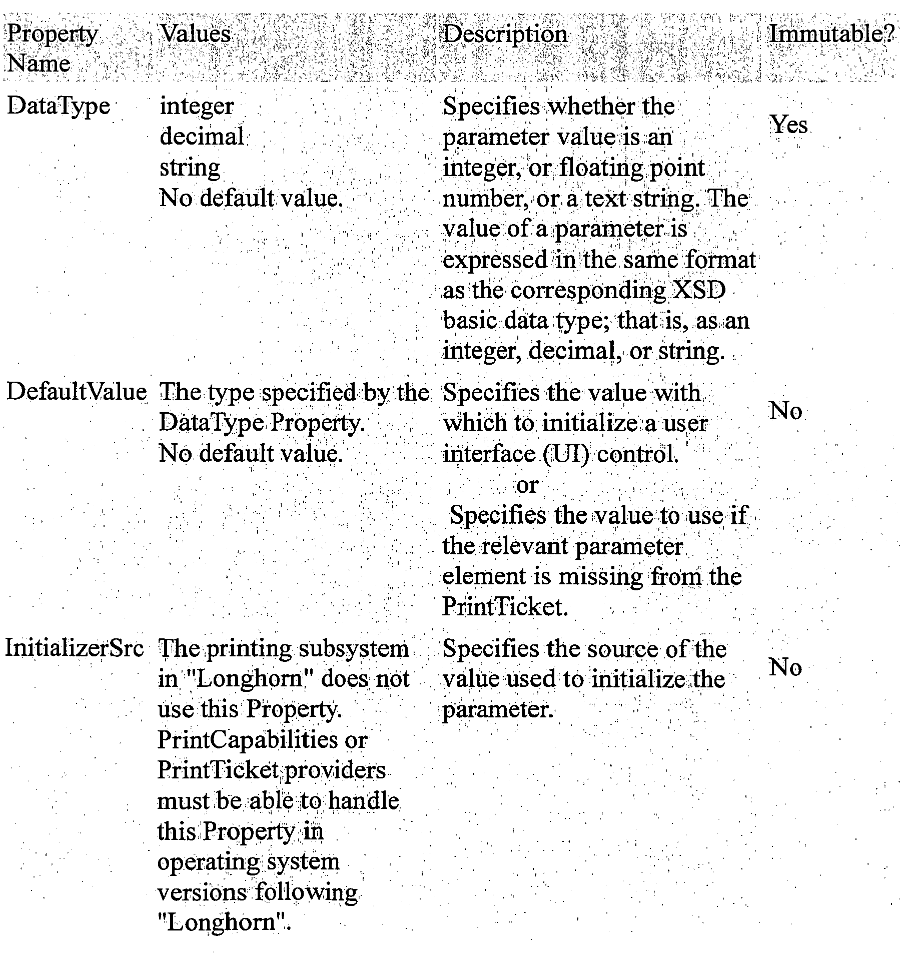

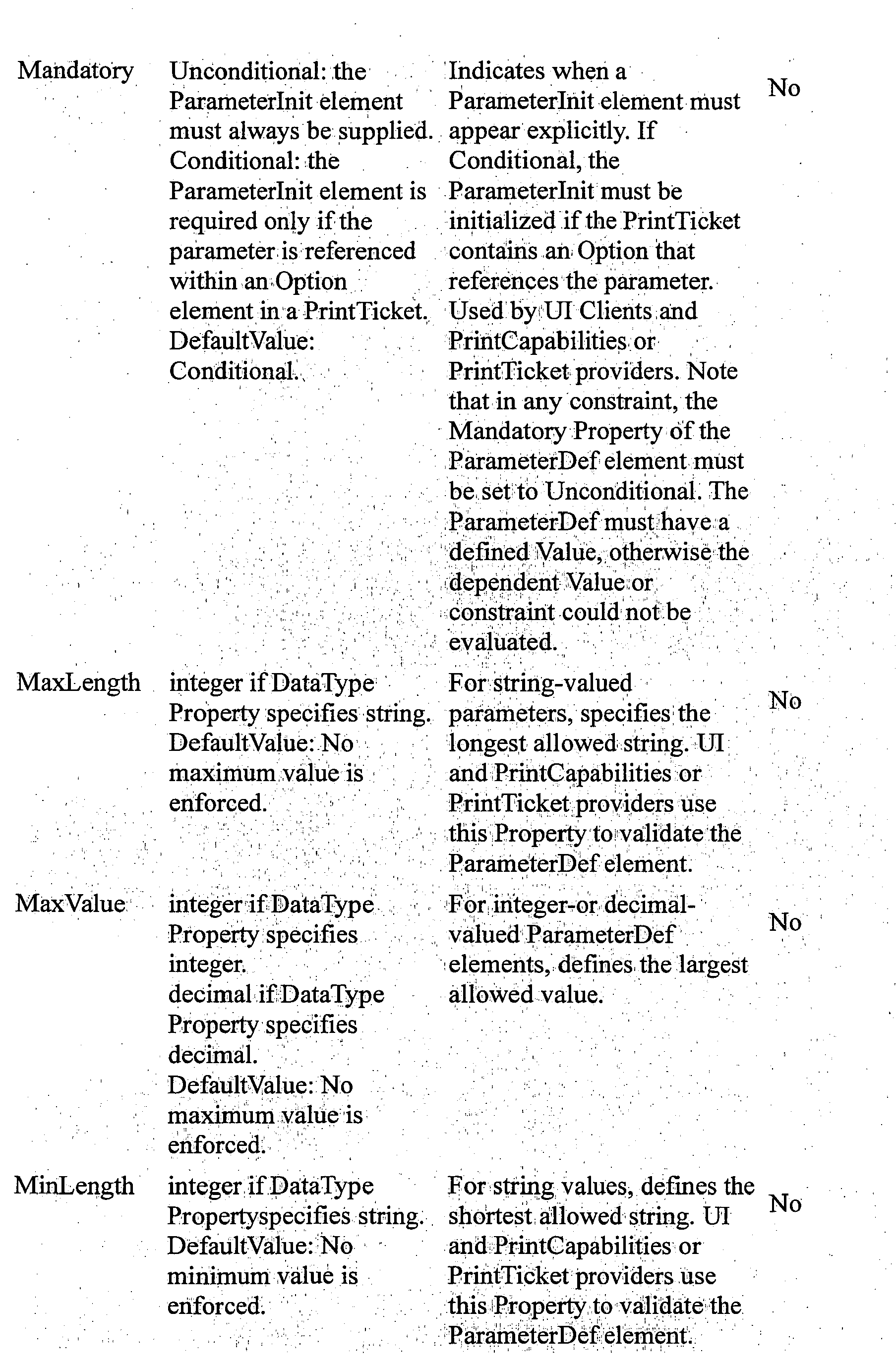

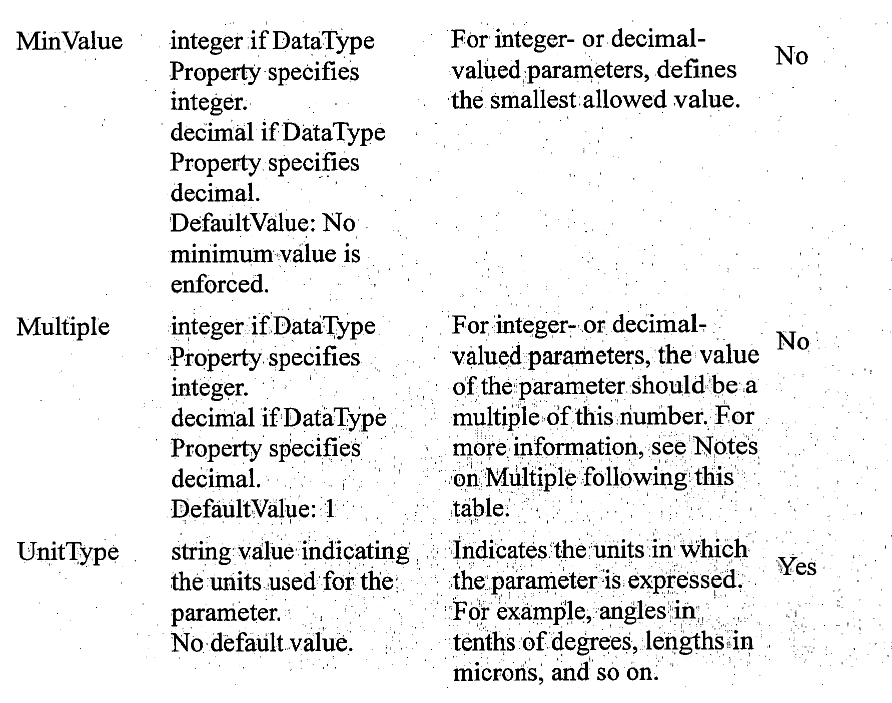

For ParameterInit elements with integer or decimal values, the value of the ParameterInit should be a multiple of this number. For example, decimal-valued ParameterInit elements can be limited to tenths by setting this property to 0.1. UI elements use this Property when they construct dialogs and UI controls. In addition, PrintTicket validation code can use this Property to round the value of a ParameterInit to the nearest value indicated by Multiple. Note: Device drivers and PrintCapabilities providers should not assume that ParameterInit values are multiples of this Property value. Each provider must be able to round arbitrary values to the nearest useable value due to the possibility that different providers might specify different and conflicting values for this property.

ParameterRef elements specifically apply to Option elements, allowing the ability for that Option element to refer to a particular ParameterDef element. For these Option elements, a ScoredProperty element that characterizes the Option is not hard-coded in the PrintCapabilities document as a Value, but instead is variable. To enable this variability, these ScoredProperty elements contain a ParameterRef element. A ScoredProperty element may not contain both a Value element and a ParameterRef element. Option elements containing one or more ParameterRef elements are called parameterized Option elements.

The Print Schema Framework allows an Option element to contain any number of ScoredProperty elements that refer to Parameter elements, together with any number of ScoredProperty elements that contain Value elements. The Framework also allows any number of Feature elements to contain parameterized Option elements, and any number of parameterized Option elements are permitted for each Feature element. Also, the same parameter construct can be referred to by several different Option elements, Option elements that can belong to the same or different Feature elements.

### Property Elements

In addition to appearing within Feature and Option elements, Property elements can appear at the root level of the respective underlying technologies. The Print Schema defines a set of Property elements that can be used to describe a device in a portable manner. However, if these properties are insufficient to your needs as a PrintCapabilities provider (typically because the device being supported has novel aspects not anticipated by the Print Schema), you may introduce your own private Property elements. You can enhance or elaborate the information provided by a public Property by adding one or more private subproperties as element content of the public Property.

Property elements are defined by using an Extensible Markup Language (XML) element tag, <Property>. Each Property is assigned a name by means of its name attribute. The name must be an XML QName and must conform to the Namespace Convention. For details, see XML Attributes. The Property name attribute and its location within the hierarchy of parent Property elements (if it is a subproperty) uniquely identify the Property within the PrintCapabilities document or PrintTicket.

A Property may contain one or more Value elements, or one or more child Property elements (called subproperties), or a combination of both. Subproperties are useful when the Property itself is composed of multiple components. For example, a "ConsumableColor" Property might have "C", "M", and "Y" components.

Property elements can also contain Attribute elements, which guide the system in its handling of the Property data. There are no Attribute elements defined for the initial version of the Print Schema Framework.

### Attribute, AttributeSet, and AttributeSetRef Elements

This topic discusses Attribute elements and two related element types: AttributeSet and AttributeSetRef elements.

Providers of PrintCapabilities or PrintTicket documents are not permitted to define Attribute instances; only the Print Schema is permitted to do so. Because the current version (Major Version "1") of the Print Schema does not define any Attribute instances, none should appear in any Version "1" PrintCapabilities or PrintTicket documents. It is possible that future versions of the Print Schema Keywords will define Attribute instances. This is mentioned so that PrintCapabilities and PrintTicket validation routines written today will work correctly when they process future PrintCapabilities documents or PrintTickets that might contain Attribute elements. The Summary of Element Types describes the syntax and usage for Attribute elements. Note that Attribute elements are Extensible Markup Language (XML) elements and should not be confused with XML Attributes, which are discussed in XML Attributes.

An AttributeSet element is a collection of one or more Attribute elements that is defined at the root level of the respective underlying technology (the PrintCapabilities document or the PrintTicket). Either the Print Schema Keywords or private parties can define an instance of this element type. An AttributeSet can be referred to from within any element that can be the parent of an Attribute element.

An AttributeSetRef element is used as a reference to an AttributeSet instance. This is accomplished by using the same name attribute for the AttributeSetRef as for the corresponding AttributeSet element. The Print Schema Framework defines a reference to an AttributeSet element to be equivalent to the content of the AttributeSet appearing in place of the AttributeSetRef element itself. Consumers of PrintCapabilities documents must be able to support this "macro expansion" if they support or access Attribute elements.

An AttributeSet element must appear at the root level. The AttributeSet must be given a name by means of its name attribute. The Namespace Convention applies to the name attribute, as does the Sibling Uniqueness Rule (defined in Terms Used in the Print Schema). The Attribute instances that constitute an AttributeSet appear as the content of an AttributeSet instance.

### Value Elements

A Value element may appear within a Property, ScoredProperty, or Attribute element. The purpose of the Value element is to represent a value as a standard Extensible Markup Language (XML) data type. The data type is specified as an XML Attribute of the Value element, xsi:type. Note that not all XSD-defined or XML-defined types are supported. For a list of supported types, see Summary of Element Types. A Value element can contain only character content. Nothing else may appear as content in a Value element.

Some Print Schema-defined Property, ScoredProperty, and Attribute elements do not contain a Value element, because their purpose is simply to be parents of subproperties. You should not add a Value element to such properties as these, properties that do not contain a Value element.

To conform to the Print Schema Framework, which requires either a Value element or subelements be present in the elements that support values, an absent or undefined value should be represented by presenting the Value element as an empty element; that is, as <Value></Value>.

### Object and Names Defined in the Print Schema Keywords

The Print Schema Framework defines a namespace that includes the elements and Extensible Markup Language (XML) attributes defined in the Print Schema Keywords. This includes elements such as Feature, Option, and ScoredProperty; Attribute names such as name and propagate; and values for XML attributes such as constrained. In other words, every use of a name that is defined in the Print Schema Keywords should be explicitly qualified with this namespace, or should be implicitly associated with this namespace by the use of a default xmlns attribute. The Print Schema Keywords document defines the public element instances that may appear in any given context or location. Element instances must appear only within the context or location designated in the Print Schema Framework. For example, the <Option name= "Letter"> instance that is defmed in the Print Schema Keywords must appear within the <Feature name = "MediaSize"> instance (also defined in the Print Schema Keywords). You do not have the freedom to use a given Option instance outside of its specified context.

Privately-defined element instances may appear anywhere as long as the element type appears in a context allowed by the Print Schema Framework.

### XML Attributes

There are a number of Extensible Markup Language (XML) attributes that appear in several element types defined in the Print Schema Framework. XML attributes with the same name generally have the same meaning and obey the same rules regardless of the element type they reside in. Therefore, the XML attributes are listed here by name and not by their host element type. Privately-defined XML attributes are not permitted. Only the XML attributes defined here may be used in a PrintCapabilities document or a PrintTicket, and then only in the defined context.

Although private parties are not permitted to introduce new definitions into another party's namespace, they are permitted utilize existing names from another private namespace as long as its use is consistent with the usage established by the other party. Thus an Option may contain ScoredProperty elements defined by several different parties, each residing in different namespaces.

| Attribute Name | Data Types and Values | Purpose |
|---|---|---|
| name | XML QName See Notes on the name Attribute, following the table. | This XML attribute identifies the element instance. It distinguishes one element from another of the same element type. This XML attribute is so widely used it is referred to as the name attribute. For a list of restrictions, see Notes on the name Attribute, following the table |
| propagate | Enumeration No values are currently defined. | The propagate attribute is not used in the initial version of the Print Schema Framework. It is documented here so that PrintCapabilities or PrintTicket validation code implemented for the initial version of the Print Schema Framework will be able to process future schema versions without error. |
| constrained | Enumeration Allowed values: None PrintTicketSettings AdmnSettings DeviceSettings | Indicates whether the Option is available for selection or for use. For more information, see Notes on the name Attribute, following this table. |
| xmlns | URI | This XML attribute establishes a link between a namespace Uniform Resource Identifier (URI) and the namespace prefix that appears in the XML QName. You must establish such a link to the namespace URI defined for the Print Schema Framework before you can use any of the Framework-defined element tags, Attributes, name attributes, and so on. You may declare this namespace to be the default to avoid actually qualifying the element tags with a namespace prefix, although all other QNames must be explicitly qualified. The standard namespace must be defined in the appropriate root element. Observe all XML rules and conventions regarding use of the xmlns attribute. |

The following points pertain to the name attribute.

The name attribute must be in the form of a valid XML-defined QName. That is, it must be qualified by a valid XML namespace. The QNames appearing as values of name attributes must be explicitly namespace-qualified even if a default namespace is defined.

Character content must be that of a valid XML-defined QName.

Privately-defined names must be qualified with a namespace that is uniquely associated with the party that introduced the name attribute.

Sibling Uniqueness requirement: No two sibling elements belonging to the same element type may have the same name attribute. The only exception is Option elements, where the name attribute is actually a syntactic shorthand for the ScoredProperty named OptionName. Thus multiple-sibling Option elements may have the same name attribute.

The following element types may contain name attributes: Attribute, AttributeSet, Property, ScoredProperty, ParameterDef, Option, and Feature.
*name* attributes are required to appear in each of the element types that contain them, except in the case of Option elements, where they are optional.

PrintCapabilities and PrintTicket providers and clients might wish to expand the name attributes shortcut in Option elements to the full representation before performing further processing. This simplifies implementation.

The allowed values of the constrained attribute have the following meanings. Note that these values are listed in order, from least restrictive (None) to most restrictive (DeviceSettings): *None* means that the Option is not constrained; *PrintTicketSettings* means that the Option is constrained by the PrintTicket settings. This implies that changing the configuration can remove the constraint; *AdminSettings* means that the Option is constrained by the administrator's settings; the Option cannot be enabled by the user; *DeviceSettings* means that the Option is constrained by the device settings or the physically installed device options; the Option cannot be enabled by either the user or the administrator.

When the PrintCapabilities provider reports values of the constrained attribute, the most restrictive constraint found should be reported. For example, if an Option is constrained by both an administrator setting and a device setting, the PrintCapabilities provider should report DeviceSettings.

### Print Schema Keywords

The following section describes the Print Schema Keywords and is broken into the following sections: PrintCapabilities and PrintTicket. The PrintCapabilities section contains the following sub-sections: User Configurable Elements, Administrator Configurable Elements, Device Information and Parameter Definitions.

### PrintCapabilities

The following represent PrintCapabilities elements that are intended to be configurable by the end-user through the client user interface (UI). It is to be appreciated and understood that the examples below constitute examples only and that other elements which are different from or additional to those discussed below can be utilized without departing from the spirit and scope of the claimed subject matter.

### DeviceInputBins

Describes the installed input bins in a device or the full list of supported bins for a device.

### DeviceOutputBins

Describes the installed output bins in a device or the full list of supported bins for a device.

### DevicePageProtection

Describes whether a device will protect against pages too large to fit in memory.

### DocumentBannerSheet

Describes the banner sheet. Each document will have a separate sheet.

### DocumentBinding

Describes the method of binding. Each document is bound separately.

### DocumentCollate

Describes the collating characteristics of the output. Each document will be collated separately.

### DocumentCoverBack

Describes the back (ending) cover sheet. Each document will have a separate sheet.

### DocumentCoverFront

Describes the front (beginning) cover sheet. Each document will have a separate sheet.

### DocumentDuplex

Describes the duplex characteristics of the output. Each document is duplexed separately.

### DocumentHolePunch

Describes the hole punching characteristics of the output. Each document is punched separately.

### DocumentNUp

Describes the output of multiple logical pages to a single physical sheet. Each document is complied separately.

### DocumentPageRanges

Describes the output range of the document in pages.

### DocumentRollCut

Describes the cutting method for roll paper. Each document is handled separately.

### DocumentSeparatorSheet

Describes the separator sheet(s) for a document.

### DocumentStaple

Describes the stapling characteristics of the output. Each document is stapled separately.

### JobAccountingSheet

Describes the accounting sheet. The entire document will have a single sheet.

### JobBannerSheet

Describes the banner sheet. The entire job will have a single sheet.

### JobBinding

Describes the method of binding. All documents are bound together.

### JobCollate

Describes the collating characteristics of the output. The entire job will be collated as a unit.

### JobCoverBack

Describes the back (ending) cover sheet. The entire job will have a single sheet.

### JobCoverFront

Describes the front (beginning) cover sheet. The entire job will have a single sheet.

### JobDatatype

Specifies the data format to use for sending the job to the print subsystem.

### JobDeviceLanguage

Describes the device languages supported.

### JobDuplex

Describes the duplex characteristics of the output. All documents are duplexed together.

### JobErrorSheet

Describes the error sheet output. The entire job will have a single error sheet.

### JobHolePunch

Describes the hole punching characteristics of the output. All documents are punched together.

### JobInputBins

Describes the installed input bins in a device or the full list of supported bins for a device.

### JobNUp

Describes the output of multiple logical pages to a single physical sheet. All documents are compiled together.

### JobOutputBins

Describes the installed output bins in a device or the full list of supported bins for a device.

### JobOutputOptimization

Describes the job processing, intended to optimize the output for particular use scenarios.

### JobPageOrder

Defined the ordering of pages for the job.

### JobPageStreaming

Describes the job streaming characteristics. Uses a single page stream for the entire job.

### JobRollCut

Describes the cutting method for roll paper. All documents in the job are handled the same.

### JobStaple

Describes the stapling characteristics of the output. All documents are stapled together.

### PageBorderless

Describes the borderless characteristics of a page.

### PageCanvasSize

Describes the imaged canvas for layout and rendering. This will be reported based on PageMediaSize and PageOrientation.

### PageCompression

Describes the compression algorithm used to compress the output.

### PageDeviceFontSubstitution

Describes the enabled/disabled state of device font substitution.

### PageForceFrontSide

Force the output to appear on the front of a media sheet. Relevant to media sheets with different surfaces on each side.

### PageMediaColor

Describes the MediaColor options and the characteristics of each option.

### PageMediaSize

Describes the MediaSize used for output.

### PageMediaType

Describes the MediaType options and the characteristics of each option.

### PageMirrorImage

Describes the mirroring setting of the output.

### PageNegativeImage

Describes the negative setting of the output.

### PageOrientation

Describes the orientation of the media sheet.

### PageOutputColor

Describes the color setting of the output.

### PageOutputQuality

Describes the quality of the output.

### PagePhotoPrintingIntent

Indicates a high-level intent to the driver for population of photo printing settings.

### PagePoster

Describes the output of a single page to multiple physical media sheets.

### PageResolution

Describes the output resolution.

### PageScaling

Describes the scaling characteristics of the output.

### PageTrueTypeFontMode

Describes the method of TrueType font handling to be used.

### Page Watermark

Describes the watermark setting of the output and the watermark characteristics.

The following represent PrintCapabilities elements that are intended to be configurable by the administrator of the print queue.

### DeviceComment

Specifies a comment for the device to display (for example, "Device down until 1:00 P.M. for maintenance").

### DeviceDescription

Specifies a description of the device.

### DeviceHostName

Specifies the host name of the device (if applicable).

### DeviceLocation

Specifies a descriptive location for the device.

### DeviceName

Specifies a descriptive name for the device.

The following represent PrintCapabilities elements that report information about the device to the client, but are read-only.

### DeviceBiDi

Describes the BiDi capabilities of the device.

### DeviceCompatibleIDs

Specifies the list of IDs compatible with the device.

### DeviceFallbackURI

Specifies a default device to fall back to if the device specified is not available.

### DeviceFirmwareVersion

Specifies the firmware version of the device.

### DeviceID

Specifies a unique ID for the device.

### DeviceIP

Specifies the IP address of the device (if applicable).

### DeviceManufacturer

Specifies the manufacturer of the device.

### DeviceMaxJobSizeAllowed

Specifies the maximum job size that can be sent to the device.

### DeviceMediaSize

Describes the device media-size capabilities.

### DeviceMemory

Specifies the details of the device memory.

### DeviceModelName

Specifies the manufacturer's model name for the device.

### DeviceMonitorEnvironment

Specifies the operating system environment the monitor is designed for.

### DeviceMonitorID

Specifies a unique ID for the monitor.

### DeviceMonitorName

Specifies the monitor name for the device.

### DevicePnPID

Specifies the Plug and Play ID for the device.

### DevicePortID

Specifies a unique ID for the port.

### DevicePortType

Describes the device port type.

### DevicePrintRate

Specifies the current print rate capability.

### DevicePrintSchemaVersion

Specifies the highest Print Schema version supported by the device.

### DevicePSMemory

Specifies the details of the device memory for PostScript use.

### DeviceSerialNumber

Specifies the manufacturer's serial number for the device.

### DeviceTechnology

Specifies the list of output technologies supported by the device.

### DeviceType

Specifies the general type of the device.

### DeviceTypeFunction

Specifies the general type of the device.

### DeviceURI

Specifies the URI for the device, if applicable.

The following is the list of parameters referenced by the PrintCapabilities.

### DocumentBannerSheetSource

Specifies the source for a custom banner sheet.

### DocumentCopyCount

Specifies the number of copies of a document.

### DocumentCoverBackSource

Specifies the source for a custom back-cover sheet.

### DocumentCoverFrontSource

Specifies the source for a custom front-cover sheet.

### Job Account Username

Specifies the username to which accounting information for the job should be attributed. For example, this could be a general account used by all members of a certain group, i.e. marketing personnel all use the same account.

### JobBannerSheetSource

Specifies the source for a custom banner sheet.

### JobComment

Specifies a comment associated with the job. Example: "Please deliver to room 1234 when completed".

### JobCopyCount

Specifies the number of copies of a job.

### JobCoverBackSource

Specifies the source for a custom back-cover sheet.

### JobCoverFrontSource

Specifies the source for a custom front-cover sheet.

### JobErrorSheetSource

Specifies the source for a custom error sheet.

### JobOwnerUsemame

Specifies the usemame associated with the print job. This is commonly the user that initiated the job and may or may not correspond to the JobAccountUsername.

### JobPageStreamingPagesPerSubset

Specifies the pages per subset for page streaming.

### JobPriority

Specifies a numerical priority for the job. 0 is the highest priority and 255 is the lowest.

### PageCopyCount

Specifies the number of copies of a job.

### PageMediaColorCIELabA

Specifies the CIELab red-green value for the Custom MediaColor option.

### PageMediaColorCIELabB

Specifies the CIELab yellow-blue value for the Custom MediaColor option.

### PageMediaColorCIELabL

Specifies the CIELab lightness value for Custom MediaColor option.

### PageMediaSizeMediaSizeX

Specifies the dimension MediaSizeX direction for the Custom MediaSize option.

### PageMediaSizeMediaSizeY

Specifies the dimension MediaSize Y direction for the Custom MediaSize option.

### PageMediaSizePSHeight

Specifies the height of the page, parallel to the feed-orientation direction.

### PageMediaSizePSHeightOffset

Specifies the offset, parallel to the feed-orientation direction.

### PageMediaSizePSOrientation

Specifies the orientation relative to the feed-orientation direction.

### PageMediaSizePSWidth

Specifies the width of the page perpendicular to the feed-orientation direction

### PageMediaSizePSWidthOffset

Specifies the offset perpendicular to the feed-orientation direction.

### PageScalingScaleX

Specifies the scaling offset in the CanvasSizeX direction for custom scaling.

### PageScalingScaleY

Specifies the scaling offset in the CanvasSizeY direction for custom scaling.

### PageScalingScale

Specifies the scaling factor for custom square scaling.

### PageScalingScaleX

Specifies the scaling factor in the CanvasSizeX direction for custom scaling.

### PageScalingScaleY

Specifies the scaling factor in the CanvasSizeY direction for custom scaling.

### PageWatermarkOriginX

Specifies the origin of a watermark relative to the origin of the PageCanvasSize.

### PageWatermarkOriginY

Specifies the origin of a watermark relative to the origin of the PageCanvasSize.

### PageWatermarkSizeX

Specifies the size of the watermark relative to the PageCanvasSize X direction.

### PageWatermarkSizeY

Specifies the size of the watermark relative to the PageCanvasSize Y direction.

### PageWatermarkTextAngle

Specifies the angle of the watermark text relative to the PageCanvasSize X direction.

### Page Watermark Text Text

Specifies the text of the watermark.

### PrintTicket

The following represent PrintTicket elements that are intended to be configurable by the end-user through the client UI. PrintTicket elements also include all of the PrintCapabilities elements discussed above. For the sake of brevity, those elements are not described here again.

### DocumentID

Specifies a unique ID for the document.

### DocumentName

Specifies a descriptive name for the document.

### DocumentURI

Specifies a URI for the document.

### JobID

Specifies a unique ID for the job.

### JobName

Specifies a descriptive name for the job.

### JobURI

Specifies a URI for the document.

### PrintCanabilities Schema and Document Construction

Some systems can severely limit the type of information non-driver components can obtain, with regard to the capabilities and properties of printing devices. In addition, in many systems there is no support for publishing the capabilities of print processors, nor is there a method to enumerate nonstandard features. Thus there is no way for a component other than a driver to construct a complete user interface. Furthermore, the client or application cannot completely determine the capabilities of devices or print queues.

The PrintCapabilities Schema is intended to eliminate many of these limitations by providing a superset of the functionality afforded by these functions. If more functionality is needed, a provider of the PrintCapabilities document can extend the Print Schema Keywords, within the constraints of the Print Schema Framework, by adding privately-defined element instances. Because of its reliance on Extensible Markup Language (XML) as the medium of interchange, any consumer of a PrintCapabilities document can access all of the data in the document without restriction, and without concern for compatibility with different operating system versions. This section describes the PrintCapabilities Schema and details its use.

The information presented in this section can be utilized by: implementers of the PrintTicket/PrintCapabilities Provider interface, consumers of PrintCapabilities, and clients of the PrintTicket/PrintCapabilities Provider interface.

The first category in the preceding paragraph is referred to as PrintCapabilities providers in the remainder of this section. The second and third categories are referred to as PrintCapabilities consumers.

The PrintCapabilities and PrintTicket Schemas are both specialized parts of the Print Schema. The main structural differences between these subsets of the Print Schema is that the PrintCapabilities Schema includes Property and ParameterDef instances that are not contained in the PrintTicket Schema, while the PrintTicket Schema contains Property and ParameterInit instances that are not contained in the PrintCapabilities Schema. Except for these differences, the PrintCapabilities and PrintTicket Schemas generally mirror each other in content, sharing Feature, Option, ScoredProperty, and Value instances. Any such shared content must be kept up-to-date. For example, if a change is made in the MediaSize Feature in the PrintCapabilities Schema, the same change must be made in the PrintTicket Schema.

### Overview of the PrintCapabilities

The PrintCapabilities describe the configurable device attributes available on a device. A device that is described by PrintCapabilities can often be placed in a number of different configurations. In the case of a printing device, typical printing attributes include duplex printing, resolution, and media size. If the device supports these attributes, they are part of the configuration for that device. The user selects a particular configuration by assigning a specific value to each of the available attributes; for example, Duplex: OneSided, Resolution: 600 dpi, and MediaSize: Legal.

The PrintCapabilities are built on the Print Schema Framework, which defines the elements that can be used in the PrintCapabilities. The Print Schema Keywords define commonly-used element hierarchies, or keywords, for the purpose of promoting portability of the information and intent between individual clients. However, the Print Schema Keywords also allow private extensions so that PrintCapabilities can be tailored to meet specific needs.

A device's configuration space is the set of all possible values that can be assigned to all of the attributes of the device. The two most important reasons to describe the configuration space of the device in the PrintCapabilities are as follows.

The information contributes significantly to an increased understanding of the device's capabilities. This information makes it easier for a client of the PrintCapabilities to generate user interface (UI) elements, which makes it easier for the end user to select a particular configuration to process a job. By providing more details of the device's capabilities to the application and ultimately to the end user, the user's printing intent can be more effectively fulfilled.

Certain device properties presented in the PrintCapabilities might be dependent on the particular configuration selected by the client.

Some information should not be incorporated into the PrintCapabilities. This includes information that does not affect the way a job is created, does not impose constraints on the way a job is created, nor otherwise affects the device properties. For example, a device might be able to report status information, such as the set of jobs waiting to be processed. This information has no effect on the information needed to format the job, nor does it provide any indication of the capabilities available in the device. For this reason, this type of information does not need to be present in the PrintCapabilities.

Many devices do not support all possible configurations in the configuration space due to a constraint on the device. For example, a device can be constrained from performing duplex printing on transparent media. A constraint can represent a physical limitation: some media types are simply too rigid to travel through certain paper paths in the device, and so cannot be placed in some input slots or be routed to some output bins. Currently it is the responsibility of the PrintCapabilities or PrintTicket provider to validate the configuration represented by the input PrintTicket, to verify that it does not represent an invalid configuration. If the configuration is invalid, the PrintCapabilities or PrintTicket provider should modify the configuration in such a way that it becomes valid.

The device described by the PrintCapabilities might have properties that depend on the state or configuration of the device. For example, if the device is a printer, the SamplePrintRate property might have values that depend on whether Color or Monochrome is selected, or whether Duplex is selected. While the PrintCapabilities represents the full configuration space of a device, the PrintCapabilities provider produces a configuration-dependent instance of the PrintCapabilities called the PrintCapabilities document. This configuration-dependent PrintCapabilities document avoids burdening the PrintCapabilities Schema with the complexity of representing multivalued data. More importantly, to relieve a consumer of the PrintCapabilities document from the burden of extracting the appropriate value from a multivalued data representation, all Property and ScoredProperty instances in a PrintCapabilities document are required to be single-valued. In other words, each Property and ScoredProperty instance in a PrintCapabilities document must have a fixed Value, relative to the input configuration. Each PrintCapabilities document can be thought of as a snapshot of the properties of the device when the device is in a particular state. Consequently, before a PrintCapabilities document can be constructed, the configuration to be used must be provided.

The author of a PrintCapabilities document defines device attributes that make up the configuration. In the PrintCapabilities document, the author can choose to represent a device attribute either as a Feature/Option construct or as a parameter construct.

If a device attribute has a relatively small number of possible states that do not fall into any sort of obvious pattern, a Feature/Option construct is usually the better choice. For example, if the allowed values for the MediaSize device attribute are the values Letter, Legal, A4ISO, Tabloid, and Envelope 10, a Feature/Option construct would be the better choice for representation. Because of the difficulty and ambiguity associated with expressing the allowable values without explicit enumeration, the parameter construct is not appropriate for the MediaSize attribute.

If a device attribute can be represented by a range of integers, parameter representation is usually the better choice, especially for ranges that include many values. For example, if the CopyCount device attribute for a particular model of printer can range from 1 through 99,999, then this attribute should be categorized as a parameter, by defining a ParameterDef instance. Assign values to the MinValue and MaxValue standard Property instances of the ParameterDef element to define the range of values for the CopyCount attribute. Because of the large number of values that must be explicitly listed as Option elements, Feature/Option representation is not appropriate for the CopyCount device attribute.

The PrintCapabilities are intended to represent configurable device attributes as either Feature/Option constructs or parameter constructs. This information defines the configuration space of the device and can be used by a user interface (UI) client to construct a UI. The Print Schema Keywords define a set of standard Feature instances, Option instances for the standard Feature instances, and ParameterDef instances.

The Feature/Option or parameter constructs in the PrintCapabilities are intended to hold Property or ScoredProperty instances that describe a device, and that are supported by the spooler subsystem. These Property and ScoredProperty instances are of general interest to clients of the device, and contain the information that is provided by the Microsoft® Win32® DevCaps functions. The Print Schema Keywords define a set of standard Property and ScoredProperty instances.

It should be emphasized that the PrintCapabilities document is intended to represent single-valued data: data that does not depend on a particular configuration of the device. The PrintCapabilities document provides only a snapshot of configuration-dependent data.

### Configuration Dependency in the PrintCapabilities Schema

The PrintCapabilities Schema closely parallels the Print Schema FRAMEWORK, IN TERMS OF THE ELEMENTS USED AND THE GENERAL STRUCTURE EXPRESSED BY PARENT AND CHILD ELEMENTS. CONFIGURATION DEPENDENCIES, WHICH PERTAIN SPECIFICALLY TO THE PRINTCAPABILITIES, ARE LISTED here as an extension to the general framework. Configuration dependencies refer to the fact that some elements, including their contents, can be altered or even deleted from one PrintCapabilities document to the next, as a result of dependencies on the configuration. Even if a parent element is required to be independent of the configuration, its child elements might have dependencies. Such dependencies are expressed using *Switch/*Case constructs in GPD files.

As an example of a configuration dependency, consider the values associated with each Property in the PrintCapabilities document. Each PrintCapabilities document can differ in the Property instances that are defined and in the Value instances assigned to those Property instances.

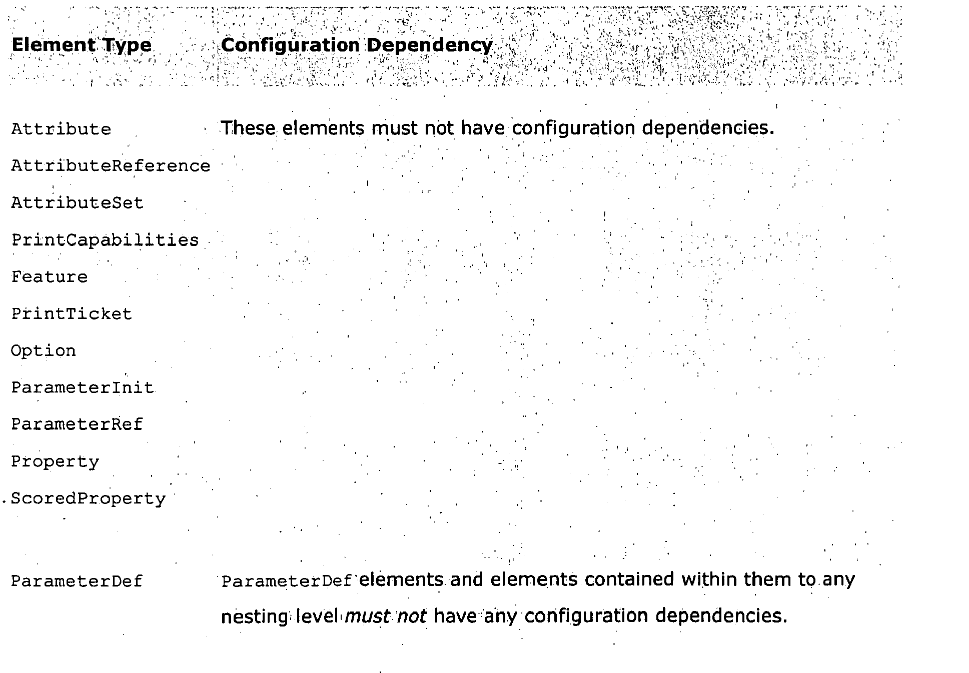

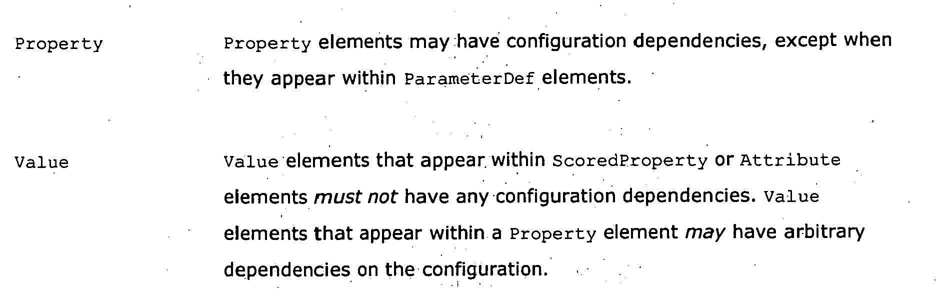

### PrintCapabilities Document Construction Checklist

The Summary of Element Types discusses the various elements that make up a PrintCapabilities document. This section provides a checklist that authors of PrintCapabilities documents can use to create a PrintCapabilities document that describes a device.

Identify all device attributes that contribute to the device configuration. For each such device attribute, determine whether it should be represented as a Feature/Option construct or as a parameter construct.

For each device feature, determine whether it can be represented by a Feature defined in the Print Schema Keywords. If not, you will need to introduce a new privately-defined Feature (and a corresponding name attribute).

For Print Schema Keywords-defined Feature instances, identify each of the available states that this Feature can be set to. Each state corresponds to an Option of the Feature instance. Determine which of these states correspond to Print Schema-defined Option instances associated with this Feature, and which states require a customized Option instance. The Option Definitions topic presents information on how to construct new Option instances, and how to derive new Option instances from existing Option instances.

For nonstandard Feature instances, identify the characteristics that can be used to distinguish one Option from another. Represent each such characteristic by a ScoredProperty element, and in each Option instance, assign each ScoredProperty a Value that is specific to that Option. Ensure that there are enough ScoredProperty elements so that each Option for a given Feature is unique. Nonstandard Feature and Option instances are by their nature nonportable. That is, another driver will not be able to find any equivalent Feature or Option to match a nonstandard Feature or Option specified in the PrintTicket that your driver creates.

Determine whether any Option must contain ParameterRef elements. For more information, see Parameter Constructs and Parameter Reference Elements.

For convenience, you can use the shorthand notation for the OptionName ScoredProperty. Note that this shorthand expression is not subject to the Sibling Uniqueness Rule that applies to other name attributes.

For parameters, determine whether one of the ParameterDef instances defined in the Print Schema Keywords is an adequate match. If so, copy the ParameterDef instance from the Print Schema Keywords and adjust the Value of each mutable Property instance for the best fit. If none of the ParameterDef instances in the Print Schema Keywords is an adequate match, create your own ParameterDef instance. For more information, see Parameters in the PrintCapabilities Document.

Ensure that all Property and ScoredProperty instances required by the Print Schema Keywords document are present in your PrintCapabilities document, and that they are properly initialized.

Add additional Property and subproperty instances as desired. You may introduce privately-defined Property instances if there are aspects of the device that you need to characterize that are not covered by the Property instances defined in the Print Schema Keywords.

Observe the Namespace Convention for name attributes. This applies to privately-defined name attributes as well as to those defined in the Print Schema Keywords.

Note that the set of Feature, Option and ParameterDef instances reported must not change, regardless of the snapshot. The ScoredProperty instances that make up each Option instance and the Value assigned to each ScoredProperty element also must not change. The same holds true for the Property instances that make up each ParameterDef instance.

For a list of additional Property instances that must be supplied to fully define Feature/Option constructs and parameters, see ParameterDef and ParameterInit. For example, each Feature must specify its user interface (UI) behavior, specifically whether exactly one or multiple Option instances may be selected for each Feature at one time. The Print Schema Keywords document defines these Property instances, where they must appear within the PrintCapabilities document, and which Value instances defined in the Print Schema Keywords are available.

The PrintCapabilities provider is responsible for emitting the appropriate Value for all configuration-dependent Property instances. For example, if the print rate depends on both the color mode and the resolution used, the PrintCapabilities provider must note the color mode and resolution settings specified in the client-supplied PrintTicket, and must report the proper value for the print rate. Note that every ScoredProperty instance must be single valued―its Value instance cannot change when the device configuration changes.

Note also that Property instances defined in the Print Schema Keywords must appear at the location specified there. They cannot appear at arbitrary locations within a PrintCapabilities document. Privately-defined Property instances may appear anywhere, even as subproperties within Schema-defined Property instances.

### Details of the PrintCapabilities Schema

This section describes semantics and usage of the element types contained in the Print Schema Framework as they apply to the PrintCapabilities Schema.

Feature/Option and parameter constructs are used in a PrintCapabilities document to represent device attributes that contribute to the definition of the device configuration. For an example of a Feature/Option construct, consider a printing device that is capable of printing in several resolutions. The device attribute that defines the resolution can be represented as a Feature instance, with each of the possible output resolution values represented as an individual Option instance. One Option instance can represent a resolution of 300 dpi, another can represent a resolution of 600 dpi, and so on.

It should be noted that the Print Schema requires that the list of Feature, Option, and ParameterDef instances reported in each PrintCapabilities document must remain constant, independent of the configuration. This allows configurations and dependencies on configurations to be expressed in an unambiguous way. The implication of this requirement is that every Feature and subfeature must have a well-defined setting, regardless of the setting of any other Feature or subfeature. Therefore, each subfeature must have an Option that is equivalent to a no-op (an Off, Disabled, or None setting), that is automatically selected for all subfeatures when the user selects the no-op Option in the parent Feature. Conversely, when one of the subfeatures is set to an enabled Option, the parent Feature and other associated subfeatures are also enabled. In the meantime, the PrintTicket provider must ensure (during PrintTicket validation) that settings for all Feature and subfeature instances are defined, regardless of the device configuration, and that the subfeature settings are consistent with the settings of the parent Feature. This ensures that the device is not given an inconsistent PrintTicket where some subfeatures indicate that, for example, stapling is enabled, but other subfeatures indicate that stapling is disabled.

Note that PrintCapabilities authors are not required to utilize the nesting capabilities of Feature elements. If they prefer, they can present all Feature instances in a flat structure, as siblings of each other. Note also that a nested collection of Feature instances can be flattened simply by moving all of the subfeatures out to the root level. The only precaution that that must be taken is to ensure that the name attributes of these Feature instances are unique.

The key consideration when you define an Option is to do so in such a way that it can be meaningfully compared to other Option instances contained in the same Feature. The comparison must be meaningful because the Option instance is used to define the configuration―not just of the device, but of the job― independent of the device or PrintCapabilities that were used to create the configuration. The other Option instances in the Feature can appear either in the same PrintCapabilities document, or in another PrintCapabilities document that represents a different device, a PrintCapabilities document that is defined by another party working independently. After a client selects the device configuration to be used to render a job or document, that configuration typically is saved, along with the job or document, in the form of a PrintTicket. The PrintTicket contains a set of Option instances, typically one for each Feature defined in the PrintCapabilities document. Option instances must be portable and must preserve printing intent, so that the intent can be communicated when this PrintTicket is given to a different device, even one that has a different PrintCapabilities document that was written by a different author. The primary benefit of this portability is that if a different device does not specifically support an Option contained in the PrintTicket, the device driver or subsystem is able to identify and select the Option that is the closest in functionality.

One of the driver's main PrintTicket functions is to identify the device Option in the PrintCapabilities document that most closely matches a particular Option listed in the PrintTicket. During this matching or scoring process, the Option in the PrintTicket is referred to as the reference Option, while the Option in the PrintCapabilities document is referred to as the candidate Option. The general matching metric is the number of matching ScoredProperty instances in the candidate and reference Option instances; a greater number of matches usually indicates better preservation of printing intent. In your scoring algorithm you might choose to give greater weight to some ScoredProperty elements than to others.

You can make Option instances portable by ensuring that all Option instances that belong to the same Feature have one or more ScoredProperty elements in common. This means that there is a set of ScoredProperty elements that appears in every Option instance (belonging to the same Feature). For example, Option instances for the MediaSize Feature can be portable if every Option instance contains ScoredProperty elements that define the intrinsic MediaSize properties: MediaSizeX, MediaSizeY, and FeedOrientation. The device driver or subsystem code can then determine how closely two Option instances agree by comparing the differences in these ScoredProperty values. If there is no Option in the PrintCapabilities document that exactly matches the one in the PrintTicket, the device driver can easily determine and select the Option that has the closest matching media dimensions.

Two objects (Option instances in this case) are said to have elements in common, or equivalently, have corresponding elements, if the following three conditions are satisfied.
1. The two elements are of the same element type.
2. The name attributes of the two elements are identical (or neither element contains a name attribute).
3. The chain of parents of the elements being compared, up through the two objects under consideration, must satisfy conditions 1 and 2.

For example, consider a situation in which there are two Option instances, where each contains a ScoredProperty instance, and that each of these ScoredProperty instances contains a Property instance. Clearly, the first condition is satisfied (the two Property instances are the same type), and part of the third condition is satisfied (the parents of the Property instances are the same type, ScoredProperty, and the parents of those elements are the Option instances, which are also of the same type). If the name attributes of, respectively, the Property instances, the ScoredProperty instances, and the Option instances are either identical or are not supplied, the two Option instances have elements in common.

From the foregoing, the first step in creating Option instances is to define a set of ScoredProperty elements that are present in most or all of the Option instances. If your device configuration attribute can be represented by a standard Feature (one listed in the Print Schema Keywords), note the ScoredProperty elements in common in the standard Option instances. You should ensure that any new Option instances that you introduce also contain these ScoredProperty elements. You are always free to add additional ScoredProperty elements as needed to differentiate your Option instances from the standard Option instances. You may even delete one or more of the ScoredProperty elements in common if there is good reason, although that reduces the portability of such an Option. Of course, portability considerations suggest using the unmodified standard Option instances unless there is some intrinsic difference between your Option and the standard Option instance that must be reflected in the new Option instance.

The following example illustrates a situation for which you might wish to add a ScoredProperty element to an Option instance. All of the standard Option instances for the MediaSize Feature have the MediaSizeX and MediaSizeY ScoredProperty elements in common. Suppose that your device can support one of the standard Letter media sizes by feeding the paper either transversely (LongEdgeFirst) or longitudinally (ShortEdgeFirst). Assuming that you do not wish to introduce a new feed direction Feature to expose this degree of freedom, you can instead modify the two MediaSize Option instances for Letter to incorporate the paper feed orientation. For these two Letter Option instances, start with the standard MediaSize Option instance and add a new ScoredProperty element to represent the FeedOrientation. In one Option instance, set the FeedOrientation ScoredProperty to LongEdgeFirst; in the other Option instance, set FeedOrientation to ShortEdgeFirst. Notice that these new Option instances maintain their portability. If the Option representing Letter, ShortEdgeFirst is saved to a PrintTicket and a different device that supports only the Letter standard Option is selected to render the Job, the Option-matching code can quickly determine that the standard Option Letter is the best match to the Option Letter, ShortEdgeFirst. The reason that this is the best match is that all of the ScoredProperty instances agree, with the exception of the FeedOrientation ScoredProperty, which does not exist in the Letter standard Option.

You might also encounter cases where the modifications to the Option actually change the meaning so much that the modified Option can no longer be considered a specialized case of the original. In such cases, you should change the OptionName ScoredProperty of the Option to reflect the difference between the modified Option instance and the unmodified one. Only the author of the PrintCapabilities document for a particular device can decide whether the Option offered by the device differs sufficiently from a standard Option instance to warrant an incompatible definition.

Now consider the case where your device has a device configuration attribute that does not correspond to any of the standard Feature instances. In this case you cannot rely on the standard Option instances to provide the list of ScoredProperty elements in common. When you create a ScoredProperty instance, your main objective is to differentiate each Option from the others in the Feature, and describe why a user would select one Option over another. The baseline is to characterize each Option with a unique name attribute, and the ScoredProperty that holds the name attribute becomes the one used for determining elements in common.

After a set of ScoredProperty elements in common has been established, it is a simple matter to assign appropriate values to each ScoredProperty to create each Option. As in the previous example, for certain Option instances, you might need to add additional ScoredProperty instances or delete some of the elements in common to create an appropriate Option instance.

It should be noted that the Print Schema requires that the set of ScoredProperty instances, their locations, and the values assigned to each ScoredProperty in an Option must remain constant, independent of the configuration. The entire concept of the Print Schema relies on Option instances having fixed, identifiable Property and ScoredProperty instances that are shared across many devices.

Notice that you are not restricted to adding ScoredProperty instances as child elements of an Option instance. ScoredProperty instances may also be nested within other ScoredProperty instances. This is useful when a device property is complex and is best represented by multiple subproperties. Adding subproperties to an existing (or public) Property or ScoredProperty is a good way to enhance an Option, while retaining portability with existing Option instances. For example, the standard Option instances for the MediaType Feature contain a ScoredProperty describing the weight of the media as Light, Medium, Heavy, or ExtraHeavy. If you want more precise descriptions of the weight, you can add a subproperty (GramsPer100Sheets in the following example) that contains the actual weight (in grams) of 100 sheets of media. The enhanced Option might look like the following example.

A comparison of the original and enhanced Option instances produces a near-perfect match, because the enhanced Option is a superset of the original, and the locations and values of each of the original ScoredProperty instances is preserved.

A concrete example of an Option that includes a ParameterRef element is the custom media size Option. Note that it references two parameters:
PageMediaSizeMediaSizeX and PageMediaSizeMediaSizeY. Each ParameterRef instance refers to a ParameterDef instance that is defined elsewhere in the PrintCapabilities document. For information about the ParameterDef element, see ParameterDef. For conceptual information about defining parameters, see ParameterDef and ParameterInit Elements.

Merely creating a parameterized Option is not sufficient to ensure that the Option will be handled and processed correctly. The PrintCapabilities/PrintTicket provider and clients must provide additional support to properly implement parameterized Option instances. The required behaviors are described in the following sections.

Assume that you are creating a PrintCapabilities client that reads in a PrintCapabilities document and selects one or more Options from each Feature and uses those to construct a PrintTicket that specifies the configuration that is to be used to process the Job. For each Feature of interest, the client must examine each Option, and decide whether that Option is appropriate for the task at hand. For an Option that is not parameterized, it can be evaluated by accessing the Value of each ScoredProperty. In the case of a nonparameterized media size Option, the client determines whether the X and Y dimensions of the media reported in each Option match the dimensions required.

In the case of the parameterized Option, the client must access the ParameterDef instance that is indicated in the ParameterRef instance contained in one of the ScoredProperty instances. The ParameterDef typically defines the range of values allowed for the parameter, as well as the units (inches, mm, and so on) represented by the value. If the required dimensions fall within the range of values permitted for each of the parameters, the client has the additional task of initializing the parameters (by means of a ParameterInit instance) in the PrintTicket. This is a particularly important task. For example, a PrintTicket should not specify a custom media size without specifying the dimensions of the media, because the resulting PrintTicket will be ambiguous and ill-defined.

A similar set of circumstances must be handled if the client is a user interface. The user interface typically displays the values of the ScoredProperty instances defined for each Option. For clarity, it is essential to display the allowed range and units for the parameters in a parameterized Option. In addition, if the user selects the parameterized Option, the user interface (UI) must prompt the user to enter the value to be used to initialize each parameter. Finally, the UI must compose a PrintTicket that reflects all of the user's selections.

PrintCapabilities and PrintTicket providers must correctly handle parameterized Option instances during the PrintTicket validation process. As discussed in Option Definitions, one step performed in PrintTicket validation is to find the Option in the current device's PrintCapabilities document (the candidate Option) that best matches the Option specified in the PrintTicket (the reference Option). When one or both of the Option instances is parameterized, there are three possible cases that must be handled by the scoring algorithm: the case where both Option instances are parameterized, and the two cases where one Option is parameterized and the other is not. In the following cases it is assumed that there is a correspondence between the parameterized ScoredProperty instances in the PrintTicketOption and a particular ScoredProperty in the PrintCapabilitiesOption. If there is no correspondence, the scoring algorithm can treat these ScoredProperty instances in the same way that it treats any other noncorresponding ScoredProperty instances.

### Case 1 - Parameterized PrintTicket and PrintCapabilities Document Options

In this case, both the reference Option (in the PrintTicket) and the candidate Option (in the PrintCapabilities document) are parameterized. Access the ParameterDef instance that is referenced by the candidate Option (both in the PrintCapabilities document), and determine whether the Parameterlnit value specified in the PrintTicket falls into the range allowed by the ParameterDef instance. If so, consider this ScoredProperty to be a match. Otherwise, this ScoredProperty is not a match.

### Case 2 - Parameterized PrintTicket Option, Nonparameterize PrintCapabilities Document Option

In this case, the PrintTicket contains a Feature with a parameterized Option, while the corresponding Feature in the PrintCapabilities document contains at least one Option that is not parameterized. Even if the PrintCapabilities document also contains other Option instances that are parameterized, the scoring algorithm must be applied to every Option, because the goal is to identify the best matching Option. The client must be able to compare nonparameterized Option candidates with a reference Option that is parameterized.

Because the parameterized Option appears in the PrintTicket, the ParameterInit instances should also be present as illustrated in the previous case. The scoring algorithm can simply replace any ParameterRef instance in the PrintTicket's parameterized Option with the Value specified by the PrintTicket's ParameterInit instance. This effectively converts a parameterized Option into one that is not parameterized. At this point the conventional matching algorithm can be used.

### Case 3 - Nonparameterized PrintTicket Option, Parameterized PrintCapabilities Document Option

In this case, the reference Option in the PrintTicket is not parameterized, while the candidate Option in the PrintCapabilities document is parameterized. Access the ParameterDef instance in the PrintCapabilities document that is referenced by the candidate Option's ParameterRef instance in the PrintTicket, and determine whether the Value defined in the reference Option for the corresponding ScoredProperty falls into the range allowed by the ParameterDef instance. If so, consider this ScoredProperty to be a match. If not, this ScoredProperty is not a match.

It should be emphasized that you make the determination of how closely two Option instances match by the number (and significance) of the ScoredProperty instances that match, independent of whether the ScoredProperty instances contain explicit Value instances or ParameterRef instances. It is possible for a candidate Option to be the best match, even though it contains several Property instances that do not match those of the reference Option, or that have no corresponding Property in the reference Option.

The Print Schema allows Property instances to be present in an Option instance. The Property instances defined in the PrintCapabilities document are not propagated to the Option instances saved in the PrintTicket. Property elements do not affect the result of the scoring process when two Option instances are compared, but ScoredProperty instances do affect this process. All device drivers that implement a scoring algorithm should observe this convention. PrintCapabilities providers are permitted to add Property instances to an Option if these instances are specific to that particular Option and no others, or if the provider intends for the value of this Property to appear for every Option in the Feature. For example, suppose that the SamplePrintRate Property is dependent on the Option selected for the SampleResolution Feature. If the SamplePrintRate Property were placed at the root level of the PrintCapabilities document, it would be single-valued and would reflect only the print rate for the currently selected resolution. However, if the SamplePrintRate Property were placed within each SampleResolution Option, each instance of the SamplePrintRate Property could reflect the print rate for the SampleResolution Option that contained it. The PrintCapabilities document would contain multiple definitions for SamplePrintRate, one corresponding to each SampleResolution Option. Using a shorthand representation, the PrintCapabilities would contain:

In some situations, placing a print rate Property within each resolution Option is more convenient for the client, because the client can determine at a glance the effect that each resolution Option has on the print rate, without the need for obtaining a new PrintCapabilities document for each resolution setting.

Note also that Property instances can also be added as child elements of Feature elements. This is useful if there are Property instances or values of Property instances that are specific to each Feature. For example, there might be a Property that specifies whether only one Option is permitted to be selected at one time for a Feature, or whether multiple Options may be selected. This is the PICK_ONE, PICK_MANY property used in PPD and GPD files. Because some Feature instances might be identified as PICK_ONE, while others might be identified as PICK_MANY, this Property must be defined for each Feature. Locating the Property as a child element of the Feature produces the association between the Property and the Feature

In order for a PrintCapabilities client to be able to construct a reasonable PrintTicket, the PrintCapabilities document must provide certain properties of Feature instances as well as Option instances within the Feature. A generic user interface (UI) module requires such information to construct a UI. This in turn requires that the Print Schema Keywords define a few Property instances that appear as children of Feature and Option elements.

Feature elements can contain the following Property.

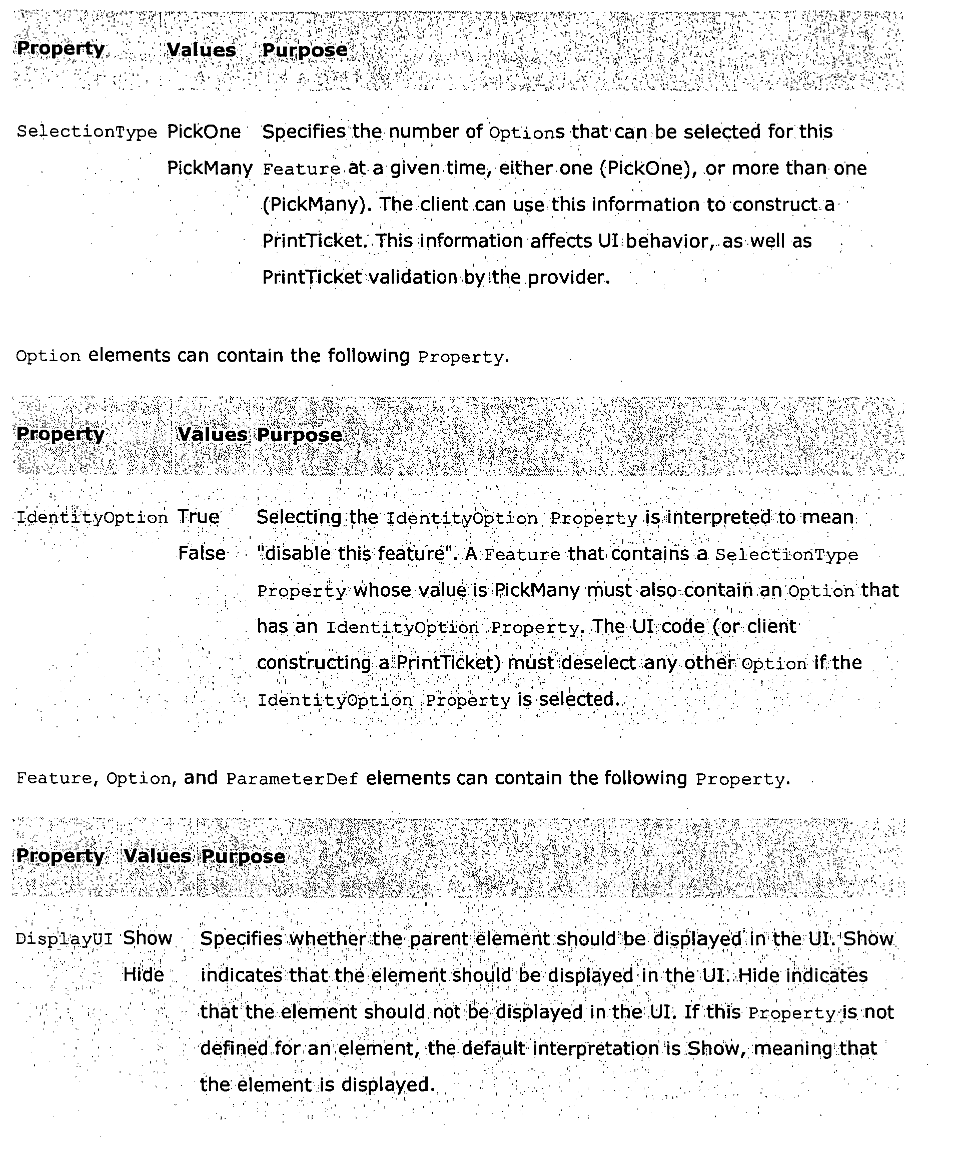

As discussed in Parameter Reference Elements, ParameterInit elements may be referenced from within Option instances, but the parameter construct also has a use that is independent of this type of element.

An example of a device configuration attribute that is well suited for parameter representation is CopyCount. The allowed values for this device configuration attribute can be easily and concisely defined without listing each of them explicitly. Although it would be possible, though tedious, to list each CopyCount value in its own Option, some device configuration attributes simply cannot be represented using a Feature/Option construct. As an example, consider a device that accepts a text string that is then used to produce a virtual watermark on each output page. The set of all possible text strings cannot easily be explicitly enumerated, but the text string can easily be described using a ParameterDef element.

The Print Schema Keywords document defines a number of commonly used parameter constructs, but PrintCapabilities providers are free to define additional ones of their own. However, these privately-defined parameter constructs are not portable to other devices, due to the fact that a PrintCapabilities document provided by another party does not define such a parameter construct. Whether schema-defined or privately-defined, the ParameterDef instance must be present in the PrintCapabilities document before the parameter is recognized and used by clients. These parameters are referred to as designated parameters.

In addition to properly scoring an Option that contains ParameterRef instances (see Referencing Parameters), PrintCapabilities or PrintTicket providers and clients must be prepared to handle the following situations involving parameters.

User interface (UI) clients must prompt the user to provide parameter initializers (values for ParameterInit elements) for designated parameters at the appropriate time so that the appropriate ParameterInit elements are inserted into the PrintTicket. UI clients must be able to distinguish the two types of parameters, unconditionally mandatory, and conditionally mandatory, and must be able to handle each type appropriately. For an unconditionally mandatory parameter, the UI must ensure that a ParameterInit element is provided for this type of parameter. For a conditionally mandatory parameter, the UI must provide a ParameterInit value if the parameter is referenced by an Option that is selected in the PrintTicket. The Mandatory status of a parameter is specified in a ParameterDef instance. For more information, see ParameterDef and ParameterInit Elements. UI clients should validate user-supplied ParameterInit values to verify that they satisfy the requirements specified in the ParameterDef instance.

PrintTicket providers should also check the ParameterInit instances supplied by the PrintTicket to verify that all needed parameters are present, and that they satisfy the requirements specified in the ParameterDef instance. The validation code should supply reasonable defaults in the event that ParameterInit values are invalid or missing. Notice that a ParameterDef permits a default value to be supplied for this purpose. Also, if there are constraints involving the parameters, for example "if CopyCount is larger than N, then do not use a small capacity input bin," the PrintTicket validation code should detect this constraint and modify the PrintTicket to avoid activating the constraint.

If there is any dependency of the PrintCapabilities on the parameters specified in the PrintTicket, PrintCapabilities providers must monitor the ParameterInit values and produce an appropriate PrintCapabilities document.

The PrintCapabilities Schema provides PrintCapabilities authors with a substantial amount of flexibility and expressiveness that can be utilized in device descriptions, However, configuration dependencies impose a limitation on this flexibility and expressiveness. ParameterDef instances, the list of Feature elements, the list of Option instances within each Feature, and the ScoredProperty instances within each Option must not contain configuration dependencies. The PrintCapabilities document provider must detect invalid combinations of configurations and must resolve them.

### Connecting PrintCapabilities with the Print Schema

The general PrintCapabilities Schema covers the structure, purpose, and use of the various element types. It specifies the name attribute that is used to define specific instances of each element type. It specifies that PrintCapabilities authors may use instances of elements defined by the Print Schema Keywords, or they may introduce their own privately-defined instances, as long as these privately-defined instances are defined in a namespace that is clearly identified as their own. (PrintCapabilities authors may also use instances previously defined in another private namespace.)

The Print Schema Keywords document defines the specific instances of each element type available for use in PrintCapabilities documents and in PrintTickets. It also documents their purpose and usage. The Print Schema Keywords document also defines instances of several element types, as follows:
Property and subproperty instances that reside at the root of the PrintCapabilities document -- these elements describe the various aspects and capabilities of the device, and provide a common vocabulary for describing devices.
Property and subproperty instances that are children of Feature elementsthese elements describe various aspects related to a specific Feature.
Property and subproperty instances that are children of Option elementsthese elements describe the various aspects and capabilities of the device that are dependent on the Option selected for a specific Feature. These could be replaced by Property instances located at the root of the PrintCapabilities document, but offer additional convenience in some cases. For more information, see Adding Property Instances.

Attribute instances--these elements influence the way the system processes a Property that is associated with the Attribute. Because the system explicitly implements the behaviors of and responses to each Attribute, there is no support for privately-defined Attribute instances.

ScoredProperty instances--ScoredProperty instances defme the language that is used to characterize an Option. The ScoredProperty instances defined in the Print Schema Keywords make it possible for Option instances written by many different parties for many devices to be portable, and to be understood by any other device driver or PrintCapabilities or PrintTicket provider. The most widely used ScoredProperty is OptionName.

ScoredProperty Value instances--these Value instances are provided for the same reason that ScoredProperty instances are provided.

Feature instances--each Option must belong to a specific Feature, thereby requiring the Feature itself to be defined.

ParameterDef instances--a Print Schema Keywords-supplied ParameterDef instance also defines a Value for each Property contained in it. The PrintCapabilities provider is free to modify the Value instances for those Property instances that can be changed. For information about which Property instances can be changed, and which cannot be changed (are immutable), see ParameterDef and ParameterInit Elements.

It is important to note the PrintCapabilities Schema does not name any Option instances. Option instances are characterized solely by their ScoredProperty instances taken as a whole. A common misconception is that the shorthand for the OptionName Property identifies Option instances, but this is incorrect. The Value for an OptionName Property is not required to be unique for sibling Option instances, nor is the OptionName Property required to appear in an Option.

The Print Schema Keywords document defines a standard namespace to which all instance name attributes in the PrintCapabilities and PrintTicket schemas belong. All element type tags and Extensible Markup Language (XML) Attributes used by the element types also belong to this namespace.

For each instance defined in the PrintCapabilities Schema, the PrintCapabilities Schema specifies both the name attribute and the location of the instance. The provider and client must preserve both when using this instance in their PrintCapabilities document or PrintTicket.

The Print Schema Keywords document designates some instances as mandatory. These instances must appear in every PrintCapabilities document and must be properly initialized with valid Values. All instances in the Print Schema Keywords that are not designated as mandatory are optional.

### Responsibilities of Consumers of the PrintCapabilities Document

Consumers of PrintCapabilities documents have certain obligations they must uphold before they can use a PrintCapabilities document. The following requirements apply to clients of a PrintCapabilities document.

They must not reject or fail to process any syntactically valid PrintCapabilities; that is, any PrintCapabilities document that conforms to the PrintCapabilities Schema.

They must be able to work around the unexpected presence or absence of privately-defined content. This includes privately-defined content that appears within instances of Print Schema-defined elements.

They must be able to work around optional Print Schema content that is absent.

They must be aware of when to request a new document.

Values of Property instances are configuration-dependent (hence, snapshot-dependent). You must update the snapshot when you access a Property instance.

Feature, Option and ScoredProperty instances that are to be copied to a PrintTicket are by definition static. That is, they are not (and must not be) dependent on the device configuration. If you access any instances of these types, you do not need to obtain a new PrintCapabilities document when the configuration changes.

Consumers of PrintCapabilities that are user interface (UI) clients must be able to use information in a PrintCapabilities document to construct a user interface and to construct a valid PrintTicket from the user selections. This includes knowing which ParameterInit instances must be specified, and validating those instances that are specified.

### Responsibilities of PrintCapabilities Providers

PrintCapabilities providers must support a minimum set of capabilities, which are implied by the PrintTicket/PrintCapabilities Provider Interface. These capabilities are listed here.

They must follow the direction of the propagate Extensible Markup Language (XML) attribute, when it appears in the appropriate context and contains a valid value for that context.

They must generate a PrintCapabilities document that conforms to the PrintCapabilities Schema and satisfies the requirements specified in the Print Schema.

They must be able to recognize a valid PrintTicket.

They must be able to interpret a PrintTicket and understand the specific configuration it represents.

They must be able to determine whether that configuration contains constraint conflicts.

They must be able to modify an invalid or conflicting PrintTicket by making the least significant change necessary to make it both valid and without conflicts.

They must be able to generate a PrintCapabilities document for a particular device configuration.

They must be able to generate a default configuration or PrintTicket.

They must be able to generate a PrintCapabilities document that corresponds to the default configuration.

They must implement an Option-scoring algorithm capable of determining the closeness of match between two Option instances that belong to the same Feature. This algorithm is used in the PrintTicket validation process.

In addition to the foregoing requirements, the PrintCapabilities document must contain valid and correct values for each XML attribute (for example, constrained) of each Option.

### Print Capabilities Document Example

The following constitutes an exemplary PrintCapabilities document. The default namespace does not apply to XML Attributes. They must be explicitly prefix-qualified. Instance names used in the following sample are for illustration only, although they generally conform to the instance names defined in the Print Schema Keywords.

### PrintTicket Schema and Document Construction

The current method of specifying device configuration information using a DEVMODE structure suffers from several limitations. First, the DEVMODE structure is a binary structure, which can lead to problems of differing versions. Second, it is divided into a nonextensible public portion and a private portion that can be accessed only by drivers, and only then by the specific driver that created it. The PrintTicket format expresses configuration information using the Extensible Markup Language (XML)-based Print Schema Framework, thereby eliminating these shortcomings of the DEVMODE structure.

The PrintTicket Schema addresses each of the two problems just mentioned. First, the PrintTicket Schema is an XML-based text file, so problems with extensibility and versioning are eliminated. Second, configuration information is available to all clients, meaning that any client or provider can store and retrieve any information contained in a PrintTicket. Options are described using the same technique used by the Print Schema Framework and the derived PrintCapabilities document. For this reason, the PrintTicket provides all of the potential portability benefits of the Option definition model to be realized. See Print Schema Framework for more information. Those who will utilize information in this section include the following groups:
- Implementers of a PrintTicket / PrintCapabilities Provider interface
- Consumers of the PrintTicket
- Clients of a PrintTicket / PrintCapabilities Provider interface

Members of the first category in the preceding list are referred to as PrintTicket providers in the remainder of this section. Members of the last two categories are referred to as PrintTicket consumers.

The PrintTicket and PrintCapabilities schemas are both specialized parts of the Print Schema. The main structural differences between these subsets of the Print Schema is that the PrintTicket Schema contains Property and ParameterInit instances that are not contained in the PrintCapabilities Schema, while the PrintCapabilities Schema includes Property and ParameterDef instances that are not contained in the PrintTicket Schema. Except for these differences, the PrintCapabilities and PrintTicket schemas generally mirror each other in content, sharing Feature, Option, ScoredProperty, and Value instances. Any such shared content must be kept up-to-date. For example, if a change is made in the MediaSize Feature in the PrintCapabilities Schema, the same change must be made in the PrintTicket Schema.

### Overview of PrintTicket Functionality

The PrintTicket utilizes an Extensible Markup Language (XML)-based format for expressing device configuration information using the Feature/Option and parameter constructs of the Print Schema Framework. This includes all of the standard element types as well as the extensibility capabilities of the Print Schema Framework. A PrintTicket is assumed to be a self-contained description of how a single page is to be processed. The steps involved in extracting and constructing such a PrintTicket from a particular document format are not covered here.

A PrintTicket can be used to obtain a PrintCapabilities document describing the characteristics of the device for a particular configuration. Alternatively, the PrintTicket can be submitted with a set of rendering instructions to produce a page of output rendered and processed according to the configuration specified in the PrintTicket.

The primary purpose of the PrintTicket is to express print job configurations. In contrast to the PrintCapabilities document, which defines all possible configurations the device can assume (the device's configuration space), the PrintTicket's purpose is to define a single specific configuration that is applied to the job object (in this case the page) that is being processed. To promote portability and consistency of configurations, the specific keywords and hierarchy presented in the Print Schema Keywords section are used by both the PrintCapabilities and the PrintTicket technologies. In addition, the Print Schema Framework defines the basic constructs of both technologies, to promote unambiguous, open, and extensible communication of job formatting and PrintCapabilities.

In addition to providing selections for the device attributes defined in the PrintCapabilities, the PrintTicket allows additional information to be added by clients in the form of Property elements. The Print Schema defines a number of standard Property instances, and the interface provider is free to introduce private Property instances as well. For example, if members of an organization send most of their print jobs to a central batch facility, they can specify for each job a private Property instance that contains a return address. This Property can make it easier to deliver the completed job can be delivered to the originator.

As discussed in the PrintCapabilities Schema section, some of the possible configuration outcomes expressed in a PrintCapabilities document are invalid for the device. Configurations that are invalid are said to contain constraint conflicts (a term used in the world of PPD/GPD files). In order to prevent constraint conflicts, PrintTicket providers must support a PrintTicket validation operation that clients use to perform validation on their PrintTicket. This operation should detect whether the specified configuration can occur on the device. If the configuration cannot occur (because the Feature and Option elements specified do not exist in the current device, or because the configuration is constrained), the operation should modify the input PrintTicket so that it contains valid, unconstrained settings. The operation might remove or validate other information in the PrintTicket as well. Note that when a constraint conflict is encountered, the validation code must change the setting of one of the device attributes in order to avoid the constraint conflict. Option Defmitions suggests that a scoring algorithm should be used to determine which device attribute should be changed in order to best preserve the user's original intent. The validation code might hardcode the scoring algorithm to favor one device attribute over another, or it might use information supplied by a particular Property instance in the PrintTicket to guide resolution. Because there is no Property defined in the Print Schema Keywords that allows clients to specify the relative priority of each device attribute, any private PrintTicketProperty elements used for this purpose are likely to be ignored by other PrintTicket providers.

### PrintTicket Syntax and Schema

PrintTickets are expressed in the syntax of the Extensible Markup Language (XML)-based Print Schema Framework. The PrintTicket Schema closely parallels the Print Schema Framework in terms of the element types used and in the general structure expressed by parent and child elements. Note that ParameterDef elements are not permitted in a PrintTicket, and that ParameterInit elements are permitted only in a PrintTicket.

### PrintTicket Construction Checklists

This section demonstrates how the author of a PrintTicket client can use the element types defined in the Print Schema Framework to create a PrintTicket that describes intents for a device. The PrintTicket can be generic (not tied to a specific device), or it can be device-specific. The semantics of the PrintTicket are presented in greater detail. In addition, this section contains an overview of concepts and terminology that are covered in more depth in subsequent sections.

There are two fundamentally different approaches to constructing a PrintTicket. Either approach can be used.

Target the PrintTicket to an unknown or generic device by creating a generic PrintTicket. If your primary objective is to preserve the end user's intent, you might want to take this approach, by constructing and storing an unvalidated generic PrintTicket with the document.

Target the PrintTicket to a specific device, by creating a device-specific PrintTicket. If you are more interested in taking advantage of all of the features offered by a particular device, you might want to take

If the PrintCapabilities document for the device is unavailable, or if the target device is unknown, you should construct a generic PrintTicket. Because there is no PrintCapabilities document that provides a set of Feature and Option elements, or parameters, the supported instances of these element types must be obtained directly from the Print Schema Keywords.

The steps shown in the following list should be used when you create a generic PrintTicket.
1. Create an empty Extensible Markup Language (XML) document that contains the PrintTicket root. Assign a namespace prefix to the Print Schema namespace. Specify the Schema version.
2. Examine the Feature instances in the Print Schema Keywords and determine which of these you want defined in your PrintTicket. Add these Feature instances to your PrintTicket. When you transfer a subfeature, you must transfer the parent Feature, and preserve the parent-child relationship between the Feature and subfeature in the PrintTicket.
   For each Feature instance that you transfer, determine which Option instances are applicable to your PrintTicket. From this set of Option instances, transfer each entire Option instance as it appears in the Print Schema, and then remove any Property instances that are present, with the possible exception of those that have significance to your PrintTicket. Keep all of the ScoredProperty instances, making sure that you preserve their location; they are an intrinsic part of the Option definition. If there are any Attribute instances that are children of the ScoredProperty instances, you may either keep them or remove them.
3. You may also add Attribute or Property instances to any ScoredProperty. Attribute and Property elements are applicable only if the PrintTicket provider explicitly supports their use. Each provider should document the purpose and use of all supported Attribute and Property instances. Only the system PrintTicket provider can define or introduce Attribute instances. Private PrintTicket providers may support system-defined Attribute instances, but are not permitted to introduce private Attribute instances. Because you have no idea which provider will process the PrintTicket, you might wish to append only the Attribute and Property instances that are explicitly supported by the system PrintTicket provider.
4. If the Print Schema Keywords set the SelectionType Property to PickMany for a particular Feature, you may select more than one Option for that Feature, provided that the Option designated as IdentityOption is not one of those selected. IdentityOption in the Print Schema has the same effect as the None option in Postscript PPD files and Unidrv GPD files; it serves as a no-op.
5. Examine the Print Schema Keywords for ParameterDef instances that should be initialized in your PrintTicket. For each such ParameterDef instance, select the Value to be used in the ParameterInit instance in the PrintTicket. This Value must be of the correct data type, must fall within the range defined in the ParameterDef instance, and must meet all of the other requirements specified in the ParameterDef instance. Use a ParameterInit instance to initialize the parameter to the Value you have selected.
   If you are developing a user interface (UI) component, design your PrintTicket generation methods so that users can enter the Value for the ParameterInit element. In addition, the UI entry method should observe and comply with any input restrictions specified by the associated ParameterDef element.
6. Examine the contents of each Option instance that appears in the PrintTicket for occurrences of ParameterRef. If a corresponding ParameterInit instance does not already appear in the PrintTicket, follow the previous step to create a ParameterInit instance in the PrintTicket. The purpose of this ParameterInit instance is to initialize the parameter referenced by the ParameterRef instance.
7. Keep in mind that the device that processes the job might not support every Feature specified in the PrintTicket. Keep in mind also, that a named Feature might be supported, but a specified Option of that Feature might not be. The same caveats apply to parameters. Even if a device supports a named parameter, the Value specified in the ParameterInit instance might not be within the valid range for the device.
8. Examine the Print Schema Keywords for Property instances that must be present in your PrintTicket. Add a Property instance for each of these to your PrintTicket, and provide a suitable value for it using the Value element type. Make sure that Property instances are located properly within the PrintTicket. Make sure that you consult the PrintTicket Schema rather than the PrintCapabilities Schema.
9. Examine the optional Property instances defined in the PrintTicket Schema. If there are any such Property instances that should be in your PrintTicket, create them in your PrintTicket.

A device-specific PrintTicket targets a particular device and is therefore not generally portable across multiple devices.

The steps shown in the following list should be used when you create a device-specific PrintTicket.
1. Obtain a PrintCapabilities document containing only the relevant Feature instances for the device. Request a default PrintCapabilities document. This does not require you to specify an input PrintTicket because the device attributes (Feature and Option instances and parameters) that are used to construct the PrintTicket are independent of the configuration.
2. Create an empty Extensible Markup Language (XML) document containing the PrintTicket root. Assign a namespace prefix to the Print Schema namespace, and assign prefixes for all other namespaces that will be used by the PrintTicket. Specify the PrintTicket Schema version.
3. You may define settings in the PrintTicket for every Feature and ParameterDef instance reported in the PrintCapabilities document, or only those of interest to you. If a partial PrintTicket is presented to the PrintTicket interface, defaults are automatically provided for omitted Feature and ParameterDef instances during PrintTicket validation.
4. Examine the PrintCapabilities document for Feature instances and determine which of these you want defined in your PrintTicket. Add these Feature instances to the PrintTicket, but do not transfer the contents of the Feature instances to your PrintTicket. If you transfer a subfeature, the parent Feature must also be transferred, and the parent-child relationship must be preserved in the PrintTicket.
   For each Feature that you transfer, determine which Option instances are applicable to your PrintTicket. Transfer the entire Option as defined in the PrintCapabilities document, and then remove any Property instances that are present. The Property instances are used within PrintCapabilities documents, but serve no purpose in the PrintTicket. Keep all of the ScoredProperty instances, making sure that you preserve their location; they are an intrinsic part of the Option definition. If there are any Attribute instances that are children of the ScoredProperty instances, you may either keep them or remove them.
5. You may also add Attribute or Property instances to any ScoredProperty instance. Attribute and Property instances are used only if the PrintTicket provider explicitly supports their use. Each provider should document the purpose and use of all supported Attribute and Property instances. Only the system PrintTicket provider can define or introduce Attribute instances. Private PrintTicket providers may support system-defined Attribute instances, but are not permitted to introduce private Attribute instances. Note that during validation, any Property instances contained within an Option instance are stripped off, unless the namespace of the Property is recognized by the target PrintCapabilities or PrintTicket provider, and a candidate Option is found in the PrintCapabilities document whose ScoredProperty instances perfectly match those defined in the reference Option.
6. If the Print Schema Keywords set the SelectionType Property to PickMany for a particular Feature, you may select more than one Option for that Feature, provided that the Option designated as IdentityOption is not one of those selected. IdentityOption in the Print Schema has the same effect as the None option in Postscript PPD files and Unidrv GPD files; it serves as a no-op.
7. Examine the PrintCapabilities document for ParameterDef instances that should be set in your PrintTicket. For each such ParameterDef instance, select a Value to be used in the ParameterInit instance in the PrintTicket. This Value must be of the correct data type and must fall within the range defmed in the ParameterDef instance, and must meet all of the other requirements specified in the ParameterDef instance. Use a ParameterInit instance to initialize the parameter to the Value you have selected.
8. Examine the contents of each Option instance that appears in the PrintTicket for occurrences of ParameterRef instances. If a corresponding ParameterInit instance does not already appear in the PrintTicket, follow the previous step to create a ParameterInit instance in the PrintTicket. The purpose of this ParameterInit instance is to initialize the parameter referenced by the ParameterRef instance.
9. Keep in mind that constraint conflicts might prevent the device from applying the configuration you have specified in the PrintTicket. If necessary, the validation process modifies the configuration defined in the PrintTicket to one that is free of conflicts.
10. Examine the Print Schema Keywords for Property instances that must be present in your PrintTicket. Add a Property instance to your PrintTicket for each that is required, and provide a suitable value for it using the Value element type. Make sure that Property instances are located properly within the PrintTicket.
11. Examine the optional Property instances in the PrintTicket Schema. If there are any such Property instances that should be in your PrintTicket, create them in your PrintTicket.
12. You may also add privately-defined Property instances at the root level, or to any Feature, Option, or Property instance. Note however, that these privately-defined Property instances are stripped off during validation, unless the namespace they belong to is recognized by the target PrintCapabilities or PrintTicket provider. In addition, Property instances that appear anywhere within an Option instance are stripped off during validation, unless the PrintCapabilities document contains an Option that is a perfect match. Two Option instances are a perfect match if every ScoredProperty in one Option instance has a corresponding ScoredProperty in the other, and the Values of the ScoredProperty instances are the same. Consult the PrintTicket provider's Private Schema for a list of recognized private Property instances and their uses.

### PrintTicket Validation Checklist

PrintTicket providers must validate the PrintTicket prior to using it for any purpose. After the PrintTicket is validated, it may be returned to the client, or it may be discarded after use. This checklist covers the tasks the provider must perform during validation. The validation process will frequently alter the content of the PrintTicket, although it will not alter a previously-validated PrintTicket.

Validation is always performed against a specific device that has a set of Feature, Option and ParameterDef instances defined in a PrintCapabilities document. The validation code should have access to the set of Feature instances (and the contained Option instances) and ParameterDef instances for the specific device, and should not need to access the PrintCapabilities. The information from the Feature, Option, and ParameterDef instances is needed in certain parts of the validation process.
1. During attempts to locate corresponding or matching elements, note that the namespaces of the elements must match before any Qualified Name can be considered a match. All element names, Attribute names, and instance names are namespace-qualified. For elements that are nested, their locations must match before the elements are considered a match.
2. Verify that all element tags are in the public namespace, are defmed by the PrintTicket Schema, contain the proper Extensible Markup Language (XML) Attributes and Attribute Values, and that the location of each element type conforms to the PrintTicket Schema-defined usage.
3. Determine all namespaces reported by PrintCapabilities document. Remove all elements (and their descendants) from the PrintTicket whose instance names belong to namespaces not reported by PrintCapabilities document. Note the difference between this case and the following case, which involves unrecognized instance names within a known namespace.
4. Due to the fact that the schemas are continually being extended with the addition of new element instance definitions, the validation code should not be written under the assumption that every instance name in a given namespace is known. The validation code cannot treat unrecognized instance names within a known namespace as errors, nor can it delete them from the PrintTicket.
5. If any element instance has a duplicate sibling that is not permitted by the PrintTicket Schema, keep only the first occurrence and delete the duplicates, including the contents of the duplicated element.
6. Remove from the PrintTicket any Feature or subfeature (and all its children) that has no corresponding Feature in the PrintCapabilities document.
7. Check the SelectionType Property defined in the PrintCapabilities document for each of the remaining Feature instances in the PrintTicket. Any Feature whose SelectionType Property is set to PickOne must have exactly one Option instance present in the PrintTicket, while a Feature whose SelectionType Property is PickMany may have more than one. If a PrintTicketFeature has no Option instance, supply the default Option instance. Since you are the provider, you know which is the default Option for every Feature.
   For a Feature whose SelectionType Property is PickMany, with more than one Option selected in the PrintTicket, verify that no Option is designated as IdentityOption. If there is, delete every other Option, leaving only the one designated IdentityOption.
8. Remove any ParameterInit instance in the PrintTicket that has no corresponding ParameterDef instance in the PrintCapabilities document.
   For any other ParameterInit instances in the PrintTicket, verify that the Value for each conforms to the PrintCapabilities document's ParameterDef instance. If a Value is missing, supply the default that is provided in the ParameterDef.
9. Pair each Option instance in the PrintTicket with an Option listed in the corresponding Feature in the PrintCapabilities document, based on the results of the scoring algorithm. Scoring is the process of finding the Option in the PrintCapabilities document that best matches the Option named in the PrintTicket. For a description of what is taken into account during the scoring process, see Option Definitions. Replace each reference Option in the PrintTicket by the corresponding best matching candidate PrintCapabilities document Option. You may also rank all of the candidates by score and pass this information on to the resolving stage in case a constraint conflict prevents the best matching candidate from being used. In such cases, the resolving algorithm can use the second-best candidate rather than pick another candidate at random.
10. For a Feature whose SelectionType Property is set to PickMany, and that has more than one Option selected in the PrintTicket, verify that no Option is designated as IdentityOption. If such an Option exists, delete every other Option, leaving only the one designated IdentityOption. This step must be performed before and after the scoring algorithm is applied.
   The reason that this step must be performed twice is that it is possible for the scoring process to map multiple reference Option instances to the same candidate Option. If that happens, delete any duplicate Option instances so that the Options listed for a particular PickMany Feature are unique.
11. Add to the PrintTicket any Feature present in the PrintCapabilities document that does not appear in the PrintTicket. For such a Feature, designate the default Option as the selected Option:
12. Determine whether there are any ParameterDef instances that meet all of the following criteria:
   The ParameterDef instance appears in the PrintCapabilities document, but not in the PrintTicket.
   The Mandatory Property of the ParameterDef instance is set to either Unconditional or Conditional.
   The ParameterDef instance is referenced by a ParameterRef instance in the PrintTicket within an Option instance.
   For each such ParameterDef instance in the PrintCapabilities document, add to the PrintTicket a corresponding ParameterInit instance. Set the Value of the newly added ParameterInit instances to the default Value specified by the corresponding ParameterDef instances.
13. Perform constraint conflict detection and modify the configuration to eliminate any such conflicts. This topic does not define a particular algorithm to use to resolve constraint conflicts. You need to decide which Feature or ParameterInit instance can be changed, and an appropriate Option or Value, respectively, to select that has the least impact on the overall intent of the configuration specified in the PrintTicket. As mentioned earlier, you might wish to make use of the mapping score of each Option, and use the Option with the second highest score. To determine which Feature or ParameterInit to change, you might want to define a private Property that the client can add to the PrintTicket. This Property can define a priority for Feature and ParameterInit instances so that the resolver algorithm is informed of which Feature or ParameterInit instances are important to the client (and need to be preserved in the PrintTicket), and which are less important.
14. If the constraint resolution process has caused changes in the PrintTicket to any ParameterRef instances for which the Mandatory Property is set to Conditional, add ParameterInit instances with default Values for those that now appear, and remove any ParameterInit instance for a ParameterRef instance that no longer appears.
15. Remove all Property instances and their contents that appear within Option instances in the PrintTicket. Property elements have no role in the PrintTicket. If the validated Option for a particular Feature perfectly matches the prevalidated Option, transfer all of the Property and Attribute instances in that Option from the prevalidation PrintTicket to the now-validated PrintTicket, subject to the condition that namespaces of Property instances are registered in the PrintCapabilities document. Note that for two Option instances to be considered a perfect match, for every ScoredProperty found in one Option, there must be a corresponding ScoredProperty in the other Option, and the Values of both ScoredProperty instances must be the same.
16. If your PrintTicket provider recognizes and supports any private or public Property instances that have survived to this point, perform validation on them. Do not delete a Property at this point just because you do not recognize it― it might be intended for another phase of document processing.

### Additional Considerations for Print Ticket Providers

The PrintTicket Provider Interface has methods that can be used to make incremental changes to an existing PrintTicket. The incremental PrintTicket changes can be specified in a partial PrintTicket that is known as a PrintTicket delta. A revised PrintTicket is created by merging a PrintTicket delta with an existing PrintTicket. See the forthcoming PrintTicket Provider Interface document for more information about methods involving PrintTicket deltas.

When a PrintTicket delta is processed, the following steps must be performed.
1. Identify Feature or ParameterInit instances that are common to both the existing PrintTicket (the target PrintTicket) and the PrintTicket delta.
   For each Feature common to both the target PrintTicket and the PrintTicket delta, replace the Feature in the target PrintTicket by the corresponding Feature in the PrintTicket delta.
   For each ParameterInit common to both the target PrintTicket and the PrintTicket delta, replace the ParameterInit in the target PrintTicket by the corresponding ParameterInit in the PrintTicket delta.
2. Copy all remaining Feature and ParameterInit instances in the PrintTicket delta to the target PrintTicket.
3. If your conflict resolution algorithm allows priorities to be specified in the PrintTicket itself, you may choose to elevate the priorities of the Feature and ParameterInit instances named in the PrintTicket delta.
4. Perform PrintTicket validation as described in PrintTicket Validation Checklist.

The PrintTicket Provider Interface contains one method that returns a default PrintTicket. In addition, the PrintCapabilities Provider interface has a method that returns a default PrintCapabilities document; that is, a snapshot of the PrintCapabilities created by using a default PrintTicket. Such a default PrintTicket must be automatically generated by the following process.

After a PrintTicket is validated, it can be used to create a snapshot of the PrintCapabilities. The provider must have an internal representation for any Property whose Value is dependent on the device configuration. For example, if SpotDiameter is a Property that is dependent on both the Resolution and MediaType Features, an internal representation of SpotDiameter as it relates to the various values for Resolution and MediaType might appear as in the following table:

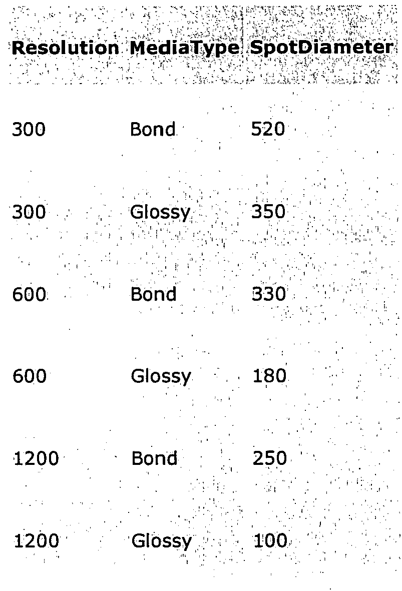

For this example, the PrintCapabilities provider must use the provided PrintTicket to select the proper entry from the internal table and report that as the Value for the SpotDiameter Property. This process is repeated for every multivalued Property (for every Property whose Value is dependent on the configuration). The PrintCapabilities Schema and Document Construction section describes the other steps involved in creating a snapshot of the PrintCapabilities.

To create a snapshot of the default PrintCapabilities document, provide a default PrintTicket (rather than an arbitrary PrintTicket) to the method that creates PrintCapabilities documents.

### PrintTicket Example

The following constitutes a PrintTicket example. The default namespace does not apply to XML Attributes. These Attributes must be explicitly prefix-qualified. The instance names in this example are for illustration only, although they reflect the current instance names defined in the Print Schema Keywords draft document. This PrintTicket is constructed specifically for a hypothetical device represented by the PrintCapabilities document example.

### Exemplary Computer System

Fig. 1 shows an exemplary computing device that can be used to implement the processes described above. Computing device 142 comprises one or more processors or processing units 144, a system memory 146, and a bus 148 that couples various system components including the system memory 146 to processors 144. The bus 148 represents one or more of any of several types of bus structures, including a memory bus or memory controller, a peripheral bus, an accelerated graphics port, and a processor or local bus using any of a variety of bus architectures. The system memory 146 comprises read only memory (ROM) 150 and random access memory (RAM) 152. A basic input/output system (BIOS) 154, containing the basic routines that help to transfer information between elements within computing device 142, such as during start-up, is stored in ROM 150.

Computing device 142 can further comprise a hard disk drive 156 for reading from and writing to a hard disk (not shown), a magnetic disk drive 158 for reading from and writing to a removable magnetic disk 160, and an optical disk drive 162 for reading from or writing to a removable optical disk 164 such as a CD ROM or other optical media. The hard disk drive 156, magnetic disk drive 158, and optical disk drive 162 are connected to the bus 148 by an SCSI interface 166 or some other appropriate interface. The drives and their associated computer-readable media provide nonvolatile storage of computer-readable instructions, data structures, program modules and other data for computer 142. Although the exemplary environment described herein employs a hard disk, a removable magnetic disk 160 and a removable optical disk 164, it should be appreciated by those skilled in the art that other types of computer-readable media which can store data that is accessible by a computer, such as magnetic cassettes, flash memory cards, digital video disks, random access memories (RAMs), read only memories (ROMs), and the like, may also be used in the exemplary operating environment.

A number of program modules may be stored on the hard disk 156, magnetic disk 160, optical disk 164, ROM 150, or RAM 152, including an operating system 170, one or more application programs 172 (such as a user agent or browser), other program modules 174, and program data 176. A user may enter commands and information into computer 142 through input devices such as a keyboard 178 and a pointing device 180. Other input devices (not shown) may comprise a microphone, joystick, game pad, satellite dish, scanner, or the like. These and other input devices are connected to the processing unit 144 through an interface 182 that is coupled to the bus 148. A monitor 184 or other type of display device is also connected to the bus 148 via an interface, such as a video adapter 186. In addition to the monitor, personal computers typically comprise other peripheral output devices (not shown) such as speakers and printers.

Computer 142 commonly operates in a networked environment using logical connections to one or more remote computers, such as a remote computer 188. The remote computer 188 may be another personal computer, a server, a router, a network PC, a peer device or other common network node, and typically comprises many or all of the elements described above relative to computer 142. The logical connections depicted in Fig. 1 comprise a local area network (LAN) 190 and a wide area network (WAN) 192. Such networking environments are commonplace in offices, enterprise-wide computer networks, intranets, and the Internet.

When used in a LAN networking environment, computer 142 is connected to the local network through a network interface or adapter 194. When used in a WAN networking environment, computer 142 typically comprises a modem 196 or other means for establishing communications over the wide area network 192, such as the Internet. The modem 196, which may be internal or external, is connected to the bus 148 via a serial port interface 168. In a networked environment, program modules depicted relative to the personal computer 142, or portions thereof, may be stored in the remote memory storage device. It will be appreciated that the network connections shown are exemplary and other means of establishing a communications link between the computers may be used.

Generally, the data processors of computer 142 are programmed by means of instructions stored at different times in the various computer-readable storage media of the computer. Programs and operating systems are typically distributed, for example, on floppy disks or CD-ROMs. From there, they are installed or loaded into the secondary memory of a computer. At execution, they are loaded at least partially into the computer's primary electronic memory. The system described herein comprises these and other various types of computer-readable storage media when such media contain instructions or programs for implementing the blocks described, in conjunction with a microprocessor or other data processor. The system described can also comprise the computer itself when programmed according to the methods and techniques described herein.

For purposes of illustration, programs and other executable program components such as the operating system are illustrated herein as discrete blocks, although it is recognized that such programs and components reside at various times in different storage components of the computer, and are executed by the data processor(s) of the computer.

### Conclusion

The methods and systems described above can be used for describing device capabilities. The exemplary schema constitutes the communication language between applications and devices. In one embodiment, the schema constitutes the communication language between applications, print subsystem components and devices. The schema is built on a framework that uses schema keywords to express the full set of user configurable capabilities for a particular device. In the illustrated and described embodiments, the schema utilizes a hierarchical structure that allows different levels of granularity in expressing a device's capabilities. One example of such expression appears in U.S. Patent Application Serial No. 10/794669, entitled Multilevel Ticket-Based Job Management Architecture for Computing Devices, filed on 03/05/2004.

Although the invention has been described in language specific to structural features and/or methodological steps, it is to be understood that the invention defined in the appended claims is not necessarily limited to the specific features or steps described. Rather, the specific features and steps are disclosed as preferred forms of implementing the claimed invention.

## Claims

1. One or more computer-readable media having computer-readable instructions thereon which, when executed, implement a method comprising:
receiving a device capabilities query from a client; and
responsive to receiving said query, generating a hierarchically-structured document that describes a device's capabilities, wherein the capabilities include configurable options and wherein said hierarchically-structured document expresses the capabilities in a hierarchy of levels.

2. The one or more computer-readable media of claim 1, wherein said device capabilities query comprises a printing device capabilities query.

3. The one or more computer-readable media of claim 1, wherein said device capabilities query comprises a printing device capabilities query, and wherein said hierarchically-structured document comprises print schema keywords and can comprise private extensions.

4. The one or more computer-readable media of claim 1, wherein said device capabilities query comprises a printing device capabilities query, and wherein said hierarchically-structured document comprises print schema keywords and can comprise private extensions, and wherein the print schema keywords define individual instances of property, feature and option elements that describe device configuration and print job formatting.

5. The one or more computer-readable media of claim 1, wherein said device capabilities query comprises a printing device capabilities query, and wherein said hierarchically-structured document comprises print schema keywords and can comprise private extensions, and wherein the print schema comprises:
attribute elements that specify the meaning of a print schema element;
attribute set elements that allow one or more property elements to reference the same collection of attribute elements;
attribute set ref elements that allow a property element to reference a group of attribute elements contained in an attribute set;
feature elements that contain a list of option and property elements;
option elements that contain property and scored property elements associated with an option;
parameter def elements that define valid characteristics of parametric input;
parameter ref elements that define a reference to a parameter init element;
a print capabilities element that represents the root of the hierarchically-structured document;
property elements that can declare a device, job formatting or other property whose name is given by its name attribute;
scored property elements that can declare a property that is intrinsic to an option definition; and
value elements that associate a literal with a type.

6. The one or more computer-readable media of claim 1, wherein said device capabilities query comprises a printing device capabilities query, and wherein one level of said hierarchy comprises a print job level.

7. The one or more computer-readable media of claim 1, wherein said device capabilities query comprises a printing device capabilities query, and wherein one level of said hierarchy comprises a document level.

8. The one or more computer-readable media of claim 1, wherein said device capabilities query comprises a printing device capabilities query, and wherein one level of said hierarchy comprises a page level.

9. The one or more computer-readable media of claim 1, wherein said device capabilities query comprises a printing device capabilities query, and wherein said levels of said hierarchy comprise a print job level, a document level, and a page level.

10. The one or more computer-readable media of claim 1, wherein said device capabilities query comprises a printing device capabilities query, wherein said hierarchically-structured document describes job formatting and device configuration information.

11. A computing device embodying the one or more computer-readable media of claim 1.

12. One or more computer-readable media having computer-readable instructions thereon which, when executed, implement a method comprising:
generating a device capabilities query to ascertain a device's capabilities; and
receiving, responsive to sending said query to a device, a hierarchically-structured document that describes a device's capabilities, wherein the capabilities include configurable options and wherein said hierarchically-structured document expresses the capabilities in a hierarchy of levels.

13. The one or more computer-readable media of claim 12, wherein said device capabilities query comprises a printing device capabilities query.

14. The one or more computer-readable media of claim 12, wherein said device capabilities query comprises a printing device capabilities query, and wherein said hierarchically-structured document comprises print schema keywords and can comprise private extensions.

15. The one or more computer-readable media of claim 12, wherein said device capabilities query comprises a printing device capabilities query, and wherein said hierarchically-structured document comprises print schema keywords and can comprise private extensions, and wherein the print schema keywords define individual instances of property, feature and option elements that describe device configuration and print job formatting.

16. The one or more computer-readable media of claim 12, wherein said device capabilities query comprises a printing device capabilities query, and wherein said hierarchically-structured document comprises print schema keywords and can comprise private extensions, and wherein the print schema comprises:
attribute elements that specify the meaning of a print schema element;
attribute set elements that allow one or more property elements to reference the same collection of attribute elements;
attribute set ref elements that allow a property element to reference a group of attribute elements contained in an attribute set;
feature elements that contain a list of option and property elements; option elements that contain property and scored property elements associated with an option;
parameter def elements that define valid characteristics of parametric input;
parameter ref elements that define a reference to a parameter init element;
a print capabilities element that represents the root of the hierarchically-structured document;
property elements that can declare a device, job formatting or other property whose name is given by its name attribute;
scored property elements that can declare a property that is intrinsic to an option definition;
value elements that associate a literal with a type.

17. The one or more computer-readable media of claim 12, wherein said device capabilities query comprises a printing device capabilities query, and wherein one level of said hierarchy comprises a print job level.

18. The one or more computer-readable media of claim 12, wherein one level of said hierarchy comprises a document level.

19. The one or more computer-readable media of claim 12, wherein said device capabilities query comprises a printing device capabilities query, and wherein one level of said hierarchy comprises a page level.

20. The one or more computer-readable media of claim 12, wherein said device capabilities query comprises a printing device capabilities query, and wherein said levels of said hierarchy comprise a print job level, a document level, and a page level.

21. The one or more computer-readable media of claim 12, wherein said device capabilities query comprises a printing device capabilities query, and wherein said hierarchically-structured document describes job formatting and device configuration information.

22. A computing device embodying the one or more computer-readable media of claim 12.

23. A method comprising:
receiving a device capabilities query from a client; and
responsive to receiving said query, generating a hierarchically-structured document that describes a device's capabilities, wherein the capabilities include configurable options and wherein said hierarchically-structured document expresses the capabilities in a hierarchy of levels.

24. The method of claim 23, wherein the query can contain a PrintTicket configuration on which to base said capabilities.

25. The method of claim 23, wherein said device capabilities query comprises a printing device capabilities query.

26. The method of claim 23, wherein said device capabilities query comprises a printing device capabilities query, and wherein said hierarchically-structured document comprises print schema keywords and can comprise private extensions.

27. The method of claim 23, wherein said device capabilities query comprises a printing device capabilities query, and wherein said hierarchically-structured document comprises print schema keywords and can comprise private extensions, and wherein the print schema keywords define individual instances of property, feature and option elements that describe device configuration and print job formatting.

28. The method of claim 23, wherein said device capabilities query comprises a printing device capabilities query, and wherein said hierarchically-structured document comprises print schema keywords and can comprise private extensions, and wherein the print schema comprises:
attribute elements that specify the meaning of a print schema element;
attribute set elements that allow one or more property elements to reference the same collection of attribute elements;
attribute set ref elements that allow a property element to reference a group of attribute elements contained in an attribute set;
feature elements that contain a list of option and property elements;
option elements that contain property and scored property elements associated with an option;
parameter def elements that define valid characteristics of parametric input; parameter ref elements that define a reference to a parameter init element;
a print capabilities element that represents the root of the hierarchically-structured document; property elements that can declare a device, job formatting or other property whose name is given by its name attribute;
scored property elements that can declare a property that is intrinsic to an option definition; and
value elements that associate a literal with a type.

29. The method of claim 23, wherein said device capabilities query comprises a printing device capabilities query, and wherein one level of said hierarchy comprises a print job level.

30. The method of claim 23, wherein said device capabilities query comprises a printing device capabilities query, and wherein one level of said hierarchy comprises a document level.

31. The method of claim 23, wherein said device capabilities query comprises a printing device capabilities query, and wherein one level of said hierarchy comprises a page level.

32. The method of claim 23, wherein said device capabilities query comprises a printing device capabilities query, and wherein said levels of said hierarchy comprise a print job level, a document level, and a page level.

33. The method of claim 23, wherein said device capabilities query comprises a printing device capabilities query, and wherein said hierarchically-structured document describes job formatting and device configuration information.

34. A method comprising:
generating a device capabilities query to ascertain a device's capabilities; and
receiving, responsive to sending said query to a device, a hierarchically-structured document that describes a device's capabilities, wherein the capabilities include configurable options and wherein said hierarchically-structured document expresses the capabilities in a hierarchy of levels.

35. The method of claim 34, wherein said device capabilities query comprises a printing device capabilities query.

36. The method of claim 34, wherein said device capabilities query comprises a printing device capabilities query, and wherein said hierarchically-structured document comprises print schema keywords and can comprise private extensions.

37. The method of claim 34, wherein said device capabilities query comprises a printing device capabilities query, and wherein said hierarchically-structured document comprises print schema keywords and can comprise private extensions, and wherein the print schema keywords define individual instances of property, feature and option elements that describe device and job formatting.

38. The method of claim 34, wherein said device capabilities query comprises a printing device capabilities query, and wherein said hierarchically-structured document comprises print schema keywords and can comprise private extensions, and wherein the print schema comprises:
attribute elements that specify the meaning of a print schema element;
attribute set elements that allow one or more property elements to reference the same collection of attribute elements;
attribute set ref elements that allow a property element to reference a group of attribute elements contained in an attribute set;
feature elements that contain a list of option and property elements;
option elements that contain property and scored property elements associated with an option;
parameter def elements that define valid characteristics of parametric input;
parameter ref elements that define a reference to a parameter init element;
a print capabilities element that represents the root of the hierarchically-structured document;
property elements that can declare a device, job formatting or other property whose name is given by its name attribute;
scored property elements that can declare a property that is intrinsic to an option definition; and
value elements that associate a literal with a type.

39. The method of claim 34, wherein said device capabilities query comprises a printing device capabilities query, and wherein said hierarchically-structured document comprises print schema keywords and can comprise private extensions, and wherein one level of said hierarchy comprises a print job level.

40. The method of claim 34, wherein said device capabilities query comprises a printing device capabilities query, and wherein said hierarchically-structured document comprises print schema keywords and can comprise private extensions, and wherein one level of said hierarchy comprises a document level.

41. The method of claim 34, wherein said device capabilities query comprises a printing device capabilities query, and wherein said hierarchically-structured document comprises print schema keywords and can comprise private extensions, and wherein one level of said hierarchy comprises a page level.

42. The method of claim 34, wherein said device capabilities query comprises a printing device capabilities query, and wherein said hierarchically-structured document comprises print schema keywords and can comprise private extensions, and wherein said levels of said hierarchy comprise a print job level, a document level, and a page level.

43. The method of claim 34, wherein said device capabilities query comprises a printing device capabilities query, and wherein said hierarchically-structured document comprises print schema keywords and can comprise private extensions, and wherein said hierarchically-structured document describes job formatting and device configuration information.

44. The method of claim 34, wherein said device capabilities query comprises a printing device capabilities query, and wherein said hierarchically-structured document comprises print schema keywords and can comprise private extensions, and wherein said hierarchically-structured document describes job formatting and device configuration information, and further comprising:
deriving settings from the hierarchically-structured document.

45. The method of claim 34, wherein said device capabilities query comprises a printing device capabilities query, and wherein said hierarchically-structured document comprises print schema keywords and can comprise private extensions, and wherein said hierarchically-structured document describes job formatting and device configuration information, and further comprising:
validating against the hierarchically-structured document.
